(19) Europäisches Patentamt
European Patent Office
Office européen des brevets

(11) EP 4 477 790 A1

(12) EUROPEAN PATENT APPLICATION

(43) Date of publication:
**18.12.2024 Bulletin 2024/51**

(21) Application number: **24181894.7**

(22) Date of filing: **13.06.2024**

(51) International Patent Classification (IPC):
***D01D 5/34*** $^{(2006.01)}$ ***D01F 6/84*** $^{(2006.01)}$
***D01F 6/92*** $^{(2006.01)}$ ***D01F 8/14*** $^{(2006.01)}$

(52) Cooperative Patent Classification (CPC):
**D01F 8/14; D01D 5/34; D01F 6/84; D01F 6/92**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.06.2023 KR 20230077655**

(71) Applicant: **SK leaveo Co., Ltd.**
**Gyeonggi-do 16338 (KR)**

(72) Inventors:
- **KIM, Seong Dong**
**16338 Suwon-si, Gyeonggi-do (KR)**
- **KIM, Kyung Youn**
**16338 Suwon-si, Gyeonggi-do (KR)**
- **KIM, Hoon**
**16338 Suwon-si, Gyeonggi-do (KR)**
- **YOU, Kyoung Hwan**
**16338 Suwon-si, Gyeonggi-do (KR)**
- **BYEON, Jun Su**
**16338 Suwon-si, Gyeonggi-do (KR)**
- **LEE, Hyeri**
**16338 Suwon-si, Gyeonggi-do (KR)**

(74) Representative: **Isarpatent**
**Patent- und Rechtsanwälte**
**Barth Hassa Peckmann & Partner mbB**
**Friedrichstraße 31**
**80801 München (DE)**

# (54) BIODEGRADABLE RESIN COMPOSITION, BIODEGRADABLE YARN INCLUDING THE SAME AND BIODEGRADABLE FIBER AGGREGATE INCLUDING THE SAME

(57) Provided is a biodegradable yarn, comprising: a first biodegradable resin composition comprising a first biodegradable resin, wherein the first biodegradable resin includes diol, aromatic dicarboxylic acid and aliphatic dicarboxylic acid, and the first biodegradable resin composition has a melt index of 6 g/10 minutes to 15 g/10 minutes at 190°C and a crystallization temperature of 40°C to 85 °C .

【FIG. 1】

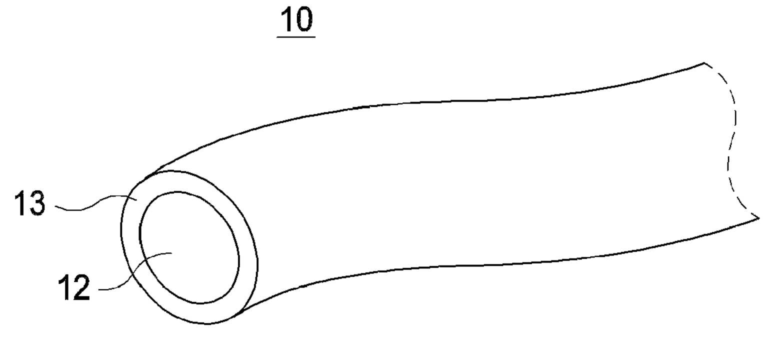


EP 4 477 790 A1

## Description

### Cross Reference to Related Application

This patent document application claims the priority under 35 U.S.C. § 119 to, and benefits of, Korean patent application No. 10-2023-0077655, filed on June 16, 2023, which is hereby incorporated herein by reference in its entirety.

### Technical Field

Embodiments of the present invention relate generally to a biodegradable resin composition, a biodegradable yarn including the same and a biodegradable fiber aggregate including the same.

### Background Art

Recently, solutions to the disposal problems of various household goods, especially disposable products, have been required as concerns about environmental issues have increased. Specifically, polymer materials are inexpensive and have excellent processability and other properties, so they are widely used to manufacture various products such as films, fibers, packaging materials, bottles, containers, etc., but have the disadvantage that harmful substances are emitted when incinerated at the end of product's lifespan, and that it often takes hundreds of years to completely decompose naturally, depending on the types thereof.

To overcome these limitations of polymers, research is actively being conducted on biodegradable polymers that decompose quickly. Known biodegradable polymers include, for example, poly lactic acid, (PLA), polybutyleneadipate terephthalate (PBAT), polybutylene succinate (PBS). Examples of biodegradable resin compositions are disclosed in Korean Patent Application Publication No. 2012-0103158.

Therefore, the present invention has been made in view of the above problems, and it is one object of the present invention to provide a yarn having improved mechanical properties and improved biodegradability and a biodegradable resin composition included therein.

### Technical Solution

In accordance with an aspect of the present invention disclosure (may also referred to as simply "present invention"), the above and other objects may be accomplished by the provision of a biodegradable yarn, comprising: a first biodegradable resin composition comprising a first biodegradable resin, wherein the first biodegradable resin includes diol, aromatic dicarboxylic acid and aliphatic dicarboxylic acid, and the first biodegradable resin composition has a melt index of 6 g/10 minutes to 15 g/10 minutes at 190°C and a crystallization temperature of 40°C to 85°C. The biodegradable yarn according to an embodiment may include a filament. The filament may includes a core part including a second biodegradable resin composition and having an elongated shape, and a sheath part including the first biodegradable resin composition and surrounding an outer peripheral surface of the core part.

The biodegradable yarn according to an embodiment may further include a second biodegradable resin composition, wherein the second biodegradable resin composition includes at least one selected from the group consisting of polybutylene succinate, polylactic acid, polybutylene adipate, polybutylene succinate-adipate, polybutylene succinate-terephthalate, polyhydroxybutyrate-valerate, polycaprolactone and polybutylene succinate adipate terephthalate.

In the biodegradable yarn according to an embodiment, the first biodegradable resin composition may have a crystallization temperature of 45°C to 80°C.

In the biodegradable yarn according to an embodiment, the first biodegradable resin composition may have a melt index of 6 g/10 minutes to 35 g/10 minutes at 190°C.

In the biodegradable yarn according to an embodiment, the first biodegradable resin composition may have a melt index decrease (MID) of 0.4 g/10 minutes. °C to 1.5 g/10 minutes. °C represented by Equation 1 below:

Equation 1

$$MID = (MI2 - MI1)/(T2 - T1)$$

where T1 is 190°C, and T2 is 250°C,
MI1 is a melt index when a temperature of the first biodegradable resin composition is T1, and
MI2 is a melt index when a temperature of the first biodegradable resin composition is T2.

In the biodegradable yarn according to an embodiment, the biodegradable yarn may have a tensile strength of 1.5 gf/denier to 6 gf/denier and an elongation at break of 20% to 200%.

In accordance with another aspect of the present invention, there is provided a biodegradable resin composition, including a biodegradable resin, wherein the biodegradable resin includes diol, aromatic dicarboxylic acid and aliphatic dicarboxylic acid, and the biodegradable resin composition has a melt index of 6 g/10 minutes to 15 g/10 minutes at 190°C and a crystallization temperature of 40°C to 85°C.

The biodegradable resin composition according to an embodiment may further include a crystallization temperature regulator.

In the biodegradable resin composition according to an embodiment, a content of terminal groups in the biodegradable resin may be 20 eq/ton or more and less than 60 eq/ton.

In the biodegradable resin composition according to an embodiment, the biodegradable resin composition may have a melt index decrease (MID) of 0.4 g/10 minutes. °C to 1.5 g/10 minutes. °C represented by Equation 1 below:

Equation 1

$$MID = (MI2 - MI1)/(T2 - T1)$$

T1 is 190°C, and T2 is 250°C,
MI1 is a melt index when a temperature of the first biodegradable resin composition is T1, and
MI2 is a melt index when a temperature of the first biodegradable resin composition is T2.

According to an embodiment, the biodegradable resin may have a number average molecular weight of 20000 g/mol to 35000 g/mol.

According to an embodiment, the biodegradable resin composition may have a melt index of 20 g/10 minutes to 90 g/10 minutes at 230°C.

According to an embodiment, the biodegradable resin composition may have a melt index of 40 g/10 minutes to 120 g/10 minutes at 250°C.

In accordance with yet another aspect of the present invention, there is provided a biodegradable fiber aggregate, including a biodegradable yarn, wherein the biodegradable yarn includes a first biodegradable resin composition including a first biodegradable resin, the first biodegradable resin includes diol, aromatic dicarboxylic acid and aliphatic dicarboxylic acid, and the first biodegradable resin composition has a melt index of 6 g/10 minutes to 15 g/10 minutes at 190°C and a crystallization temperature of 40°C to 85°C.

In the biodegradable fiber aggregate according to an embodiment, the first biodegradable resin composition may have a melt index decrease (MID) of 0.4 g/10 minutes. °C to 1.5 g/10 minutes. °C represented by Equation 1 below:

Equation 1

$$MID = (MI2 - MI1)/(T2 - T1)$$

Wherein:

T1 is 190°C, and T2 is 250°C,
MI1 is a melt index when a temperature of the first biodegradable resin composition is T1, and
MI2 is a melt index when a temperature of the first biodegradable resin composition is T2.

In the biodegradable fiber aggregate according to an embodiment, the first biodegradable resin may have a number average molecular weight of 20000 g/mol to 35000 g/mol.

In the biodegradable fiber aggregate according to an embodiment, the first biodegradable resin composition may have a melt index of 20 g/10 minutes to 90 g/10 minutes at 230°C.

In the biodegradable fiber aggregate according to an embodiment, the first biodegradable resin composition may have a melt index of 40 g/10 minutes to 120 g/10 minutes at 250°C.

In the biodegradable fiber aggregate according to an embodiment, a content of terminal groups in the biodegradable resin may be 20 eq/ton or more and less than 60 eq/ton.

## Advantageous effects

A biodegradable resin composition according to an embodiment may include a first biodegradable resin composition including a first biodegradable resin that includes diol, aromatic dicarboxylic acid and aliphatic dicarboxylic acid.

Since the first biodegradable resin composition includes the first biodegradable resin, it may have properties suitable for spinning.

In particular, the first biodegradable resin composition may have a suitable crystallization temperature. Accordingly, the first biodegradable resin composition may be easily spun to produce a biodegradable yarn.

In addition, the first biodegradable resin composition may have a suitable melt index. Accordingly, the first biodegradable resin composition may be easily spun to produce a biodegradable yarn.

In addition, the first biodegradable resin composition may have a suitable MID. Accordingly, the first biodegradable resin composition may be easily spun to produce a biodegradable yarn. Further, the first biodegradable resin composition may have a suitable number of carboxyl terminal groups. Accordingly, the first biodegradable resin composition may be easily spun to produce a biodegradable yarn.

These and other features and advantages of the embodiments of the present invention disclosure will become better understood by the skilled person in this art from the following detailed description of example embodiments in conjunction with the following drawings.

## Brief Description of the Drawings

FIG. 1 illustrates a biodegradable yarn according to an embodiment of the present invention.
FIG. 2 illustrates the cross-section of the biodegradable yarn according to an embodiment of the present invention.
FIG. 3 illustrates a biodegradable yarn according to another embodiment.
FIG. 4 illustrates a schematic diagram of an apparatus for manufacturing a first biodegradable resin composition according to an embodiment of the present invention.
FIG. 5 illustrates an apparatus for manufacturing a biodegradable yarn according to an embodiment of the present invention.
FIG. 6 illustrates the cross-section of a spinning block according to an embodiment of the present invention.

_Detailed Description_Hereinafter, the invention is described in detail through embodiments. These embodiments are not provided to limit the scope and contents of the invention disclosed and may be modified into various forms so long as the gist and technical concepts of the invention are not changed.

In this specification, when a part "includes (comprises)" a certain component, this means that it may further include (comprise) other components rather than excluding other components unless specifically stated to the contrary. In addition, all numerical ranges representing physical property values, dimensions, etc. of components described in this specification should be understood as modified by the term "about" in all cases unless otherwise specified.

In addition, when it is said that a certain element is "included (comprised)" in this specification or application, this means that other components may be further included (comprised) rather than excluding other components, unless specifically stated to the contrary. In addition, all numerical ranges representing physical property values, dimensions, etc. of components described in this specification or application should be understood as modified by the term "about" in all cases unless otherwise specified. Additionally, 'ppm' in this specification or application refers to weight basis.

FIG. 1 illustrates a filament according to an embodiment of the present invention. FIG. 2 illustrates a cross-section of the filament according to an embodiment of the present invention. FIG. 3 illustrates a filament according to another embodiment. FIG. 4 illustrates a schematic diagram of an apparatus for manufacturing a first biodegradable resin composition according to an embodiment of the present invention. FIG. 5 illustrates an apparatus for manufacturing a biodegradable yarn according to an embodiment of the present invention. FIG. 6 illustrates the cross-section of a spinning block according to an embodiment of the present invention.

As shown in FIGS. 1 and 2, a filament 10 may include a core part 12 and a sheath part 13 surrounding the core part 12.

The core part 12 may have an elongated shape extending in one direction. The core part 12 may have a cylindrical shape that continuously extends in the one direction.

The sheath part 13 surrounds the core part 12. The sheath part 13 may be disposed on the outer peripheral surface of the core part 12. The sheath part 13 may be in close contact with the outer peripheral surface of the core part 12. The sheath part 13 may entirely cover the outer peripheral surface of the core part 12.

The diameter (D) of the core part 12 may be about 1 $\mu$m to about 100 $\mu$m, about 5 $\mu$m to about 50 $\mu$m, about 10 $\mu$m to about 100 $\mu$m, about 20 $\mu$m to about 100 $\mu$m or about 1 $\mu$m to about 30 $\mu$m.

The thickness (T) of the sheath part 13 may be about 0.5 μm to about 50 μm, about 2.5 μm to about 25 μm, about 0.5 μm to about 5 μm, about 2.5 μm to about 50 μm, about 0.5 μm to about 2.5 μm or 5 μm to about 30 μm.

Alternatively, as shown in FIG. 3, a filament 11 may not have the core-skin structure. The filament 11 may have a single structure. The filament 11 may have a single wire structure without a boundary. That is, there may be no boundary in the center part and outer part of the filament 11. The filament includes a biodegradable resin composition. That is, the biodegradable yarn according to an embodiment includes a biodegradable resin composition.

The filament may include the first biodegradable resin composition and a second biodegradable resin composition.

The core part may include the second biodegradable resin composition, and the sheath part may include the first biodegradable resin composition. The core part may include the second biodegradable resin composition as a main component, and the sheath part may include the first biodegradable resin composition as a main component. The core part may be formed of the second biodegradable resin composition, and the sheath part may be formed of the first biodegradable resin composition.

The first biodegradable resin composition and the second biodegradable resin composition may have different properties. For example, the first biodegradable resin composition may be tackier than the second biodegradable resin composition. The second biodegradable resin composition may have greater mechanical strength than the first biodegradable resin composition. In addition, the first biodegradable resin composition may be more flexible than the second biodegradable resin composition. In addition, the first biodegradable resin composition may have lower crystallinity than the second biodegradable resin composition.

Accordingly, the filament 11 may have improved mechanical strength and improved bondability. In addition, the filament 11 may have improved mechanical strength and improved flexibility. Detailed characteristics of the first biodegradable resin composition and the second biodegradable resin composition are described below.

Alternatively, the core part may include the first biodegradable resin composition, and the sheath part may include the second biodegradable resin composition. The core part may include the first biodegradable resin composition as a main component, and the sheath part may include the second biodegradable resin composition as a main component. The core part may be made of the first biodegradable resin composition, and the sheath part may be made of the second biodegradable resin composition.

Alternatively, the core part may include a non-biodegradable resin composition, the sheath part may include the first biodegradable resin composition and/or the second biodegradable resin composition.

Alternatively, the core part may include the first biodegradable resin composition and/or the second biodegradable resin composition, and the sheath part may include the non-biodegradable resin composition.

The non-biodegradable resin composition may include at least one selected from the group consisting of polypropylene, polyethylene, polybutylene terephthalate, polyethylene terephthalate and polyurethane.

The core part may include the first biodegradable resin composition and the second biodegradable resin composition. The sheath part may include the first biodegradable resin composition and the second biodegradable resin composition. The core part may include the second biodegradable resin composition, and the sheath part may include a mixture of the first biodegradable resin composition and the second biodegradable resin composition.

The biodegradable yarn according to an embodiment may include a mixture of the first biodegradable resin composition and the second biodegradable resin composition. The biodegradable yarn according to an embodiment may include a mixture of the first biodegradable resin composition and the second biodegradable resin composition and the second biodegradable resin composition ma be in a content of about 50 parts by weight to about 300 parts by weight based on about 100 parts by weight of the first biodegradable resin composition in the mixture. The first biodegradable resin composition includes a first biodegradable resin. The first biodegradable resin composition may include the first biodegradable resin alone. The first biodegradable resin composition may include the first biodegradable resin in a content of about 50 wt% to about 99.9 wt% based on the total weight. The first biodegradable resin composition may include the first biodegradable resin in a content of about 70 wt% to about 99.9 wt% based on the total weight. The first biodegradable resin composition may include the first biodegradable resin in a content of about 90 wt% to about 99.9 wt% based on the total weight. The first biodegradable resin composition may include the first biodegradable resin in a content of about 95 wt% to about 99.9 wt% based on the total weight. The first biodegradable resin composition may include the first biodegradable resin, and one or more additives.

The first biodegradable resin may include diol, aromatic dicarboxylic acid and aliphatic dicarboxylic acid. The first biodegradable resin may include a diol moiety, an aromatic dicarboxylic acid moiety and an aliphatic dicarboxylic acid moiety. For example, the diol moiety may be derived from the diol, the aromatic dicarboxylic acid moiety may be derived from the aromatic dicarboxylic acid, and the aliphatic dicarboxylic acid moiety may be derived from the aliphatic dicarboxylic acid. The first biodegradable resin may include a diol component, an aromatic dicarboxylic acid component and an aliphatic dicarboxylic acid component. Likewise, the diol component may be derived from the diol, the aromatic dicarboxylic acid component may be derived from the aromatic dicarboxylic acid, and the aliphatic dicarboxylic acid component may be derived from the aliphatic dicarboxylic acid.

In describing the first biodegradable resin composition, a diol moiety may be expressed as a diol. In the first biodegradable resin, a dicarboxylic acid moiety may be expressed as a dicarboxylic acid. In addition, the moiety may be expressed as the component.

The diol may be an aliphatic diol. The diol may be at least one selected from the group consisting of ethanediol, 1,2-propanediol, 1,3-propanediol, 2-methyl-1,3-propanediol, 2,2-dimethyl-1,3-propanediol, 2,2-diethyl-1,3-propanediol, 2-ethyl-2-isobutyl-1,3-propanediol, 1,2-butanediol, 1,4-butanediol, 1,5-pentanediol, 3-methyl-1,5-pentanediol, 2,2,4-trimethyl-1,3-pentanediol, 1,6-hexanediol, 2-ethyl-1,3-hexanediol, 2,4-dimethyl-2-ethyl-1,3-hexanediol, 2,2,4-trimethyl-1,6-hexanediol, 2-methyl-1,8-octanediol, 1,9-nonanediol, 1,10-decanediol and 1,12-octadecanediol and derivatives thereof.

The diol may be at least one selected from the group consisting of 1,4-butanediol, 1,2-ethanediol, 1,3-propanediol, diethylene glycol, neopentyl glycol and derivatives thereof.

The diol may be at least one selected from the group consisting of 1,4-butanediol, 1,2-ethanediol, 1,3-propanediol, 2,3-butanediol and derivatives thereof.

The diol may include 1,4-butanediol or a derivative thereof.

The aromatic dicarboxylic acid may be at least one selected from the group consisting of phthalic acid, terephthalic acid, isophthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyldicarboxylic acid, 4,4'-diphenyletherdicarboxylic acid, anthracenedicarboxylic acid, phenanthrenedicarboxylic acid and derivatives thereof.

The aromatic dicarboxylic acid may be at least one selected from the group consisting of terephthalic acid, dimethyl terephthalate, 2,6-naphthalene dicarboxylic acid, isophthalic acid and derivatives thereof.

The aromatic dicarboxylic acid may include terephthalic acid, dimethyl terephthalate or derivatives thereof.

The aliphatic dicarboxylic acid may be at least one selected from the group consisting of oxalic acid, malonic acid, succinic acid, maleic acid, fumaric acid, glutaric acid, adipic acid, pimelic acid, serveric acid, azelaic acid, sebacic acid, dodecanedicarboxylic acid, 1,4-cyclohexanedicarboxylic acid and derivatives thereof.

The aliphatic dicarboxylic acid may be at least one selected from the group consisting of adipic acid, succinic acid, sebacic acid and derivatives thereof.

The aliphatic dicarboxylic acid may include adipic acid or a derivative thereof.

In the first biodegradable resin, a molar ratio of the total diol moieties including the diol to the total dicarboxylic acid moieties including the aromatic dicarboxylic acid and the aliphatic dicarboxylic acid may be about 1:0.9 to about 1:1.1. A molar ratio of the total diol moieties to the total dicarboxylic acid moieties may be about 1:0.95 to about 1:1.05.

In the first biodegradable resin, a molar ratio of the aromatic dicarboxylic acid moiety to the aliphatic dicarboxylic acid moiety may be about 3:7 to about 7:3. In the first biodegradable resin, a molar ratio of the aromatic dicarboxylic acid moiety to the aliphatic dicarboxylic acid moiety may be about 3.3:6.7 to about 6.7:3.3. In the first biodegradable resin, a molar ratio of the aromatic dicarboxylic acid moiety to the aliphatic dicarboxylic acid moiety may be about 4:6 to about 6:4. In the first biodegradable resin, a molar ratio of the aromatic dicarboxylic acid moiety to the aliphatic dicarboxylic acid moiety may be about 4.2:5.8 to about 5:5.

The first biodegradable resin may include a diol moiety derived from 1,4-butanediol in a content of about 90 mol% or more based on the total diols. The first biodegradable resin may include a diol moiety derived from 1,4-butanediol in a content of about 95 mol% or more based on the total diols. The first biodegradable resin may include a diol moiety derived from 1,4-butanediol in a content of about 98 mol% or more based on the total diols.

The first biodegradable resin may include an aromatic dicarboxylic acid moiety derived from terephthalic acid or dimethyl terephthalate in a content of about 30 mol% to about 70 mol% based on the total dicarboxylic acids. The first biodegradable resin may include an aromatic dicarboxylic acid moiety derived from terephthalic acid or dimethyl terephthalate in a content of about 35 mol% to about 65 mol% based on the total dicarboxylic acids. The first biodegradable resin may include a dicarboxylic acid moiety derived from terephthalic acid or dimethyl terephthalate in a content of about 40 mol% to about 60 mol% based on the total dicarboxylic acids. The first biodegradable resin may include an aromatic dicarboxylic acid moiety derived from terephthalic acid or dimethyl terephthalate in a content of about 43 mol% to about 55 mol% based on the total dicarboxylic acids. The first biodegradable resin may include an aliphatic dicarboxylic acid moiety derived from adipic acid in a content of about 30 mol% to about 70 mol% based on the total dicarboxylic acids. The first biodegradable resin may include an aliphatic dicarboxylic acid moiety derived from adipic acid in a content of about 35 mol% to about 65 mol% based on the total dicarboxylic acids. The first biodegradable resin may include an aliphatic dicarboxylic acid moiety derived from adipic acid in a content of about 40 mol% to about 60 mol% based on the total dicarboxylic acids. The first biodegradable resin may include an aliphatic dicarboxylic acid moiety derived from adipic acid in a content of about 47 mol% to about 57 mol% based on the total dicarboxylic acids. In addition, the first biodegradable resin may include a first block and a second block. The first biodegradable resin may have a molecular structure in which the first blocks and the second blocks are alternately combined.

The first block may include the diol moiety and the aromatic dicarboxylic acid moiety. The first block may be formed by an esterification reaction of the diol and the aromatic dicarboxylic acid. The first block may include only the

diol moiety and the aromatic dicarboxylic acid moiety. The first block may include only repeating units formed by an esterification reaction of the diol and the aromatic dicarboxylic acid. That is, the first block refers to the sum of repeating units of the diol and the aromatic dicarboxylic acid before being combined with the aliphatic dicarboxylic acid.

The second block may include the diol moiety and the aliphatic dicarboxylic acid moiety. The second block may be formed by an esterification reaction of the diol and the aliphatic dicarboxylic acid. The second block may include only the diol moiety and the aliphatic dicarboxylic acid moiety. The second block may include only repeating units formed by an esterification reaction of the diol and the aliphatic dicarboxylic acid. That is, the second block refers to the sum of repeating units of the diol and the aliphatic dicarboxylic acid before being combined with the aromatic dicarboxylic acid.

In the first biodegradable resin, a ratio (X/Y) of the number (X) of the first blocks to the number (Y) of the second blocks may be about 0.5 to about 1.5, about 0.6 to about 1.4, about 0.7 to about 1.3, about 0.75 to about 1.2 or about 0.8 to 1.1. The number of the first blocks may be smaller than the number of the second blocks.

The number of the first blocks may be about 30 to about 300, about 40 to about 250, about 50 to about 220, about 60 to about 200, about 70 to about 200 or about 75 to about 200.

The number of the first blocks may vary depending on the content of the aromatic dicarboxylic acid, the molecular weight of the first biodegradable resin, and a polymerization process described below. That is, as the molar ratio of the aromatic dicarboxylic acid increases and the molecular weight of the first biodegradable resin increases, the number of the first blocks may increase. The number of the second blocks may be about 30 to about 300, 40 to about 250, about 50 to about 220, about 60 to about 200, about 70 to about 200 or about 75 to about 200.

The number of the second blocks may vary depending on the content of the aliphatic dicarboxylic acid, the molecular weight of the first biodegradable resin and a polymerization process described below. That is, as the molar ratio of the aliphatic dicarboxylic acid increases and the molecular weight of the first biodegradable resin increases, the number of the first blocks may increase. When the first biodegradable resin includes the first block and the second block in the above ranges, the first biodegradable resin composition may have appropriate mechanical strength and appropriate biodegradability. In addition, when the first biodegradable resin includes the first block and the second block in the above ranges, the first biodegradable resin composition may have improved hardness together with improved flexibility. Accordingly, the first biodegradable resin composition may be easily used to manufacture injection-molded products. In addition, when the first biodegradable resin includes the first block and the second block in the above ranges, the first biodegradable resin composition may have appropriate durability to ultraviolet light, etc., and appropriate biodegradability.

The first block may be represented by Formula 1 below:

Formula 1

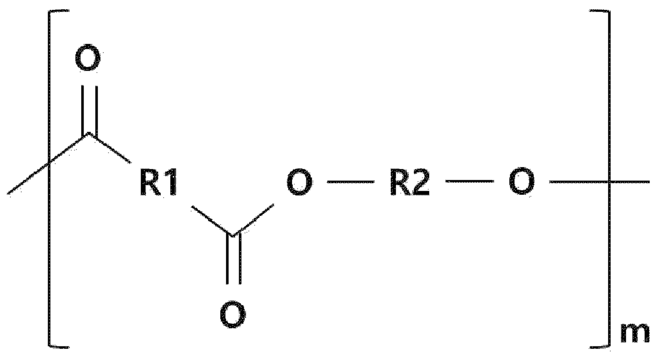

where R1 is a substituted or unsubstituted arylene group having 6 to 20 carbon atoms, R2 is a substituted or unsubstituted alkylene group having 1 to 20 carbon atoms, and m is 1 to 20. R1 may be a substituted or unsubstituted phenylene group, and R2 may be a butylene group. The second block may be represented by Formula 2 below:

Formula 2

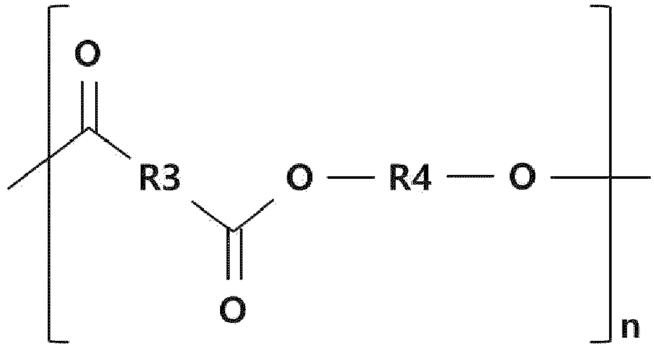

where R3 and R4 are each independently a substituted or unsubstituted alkylene group having 1 to 20 carbon atoms, and n is 1 to 20.

R3 and R4 may be a butylene group.

The first biodegradable resin may have a structure in which the first block and the second block are alternately combined with each other. The first biodegradable resin may be represented by Formula 3 below:

Formula 3

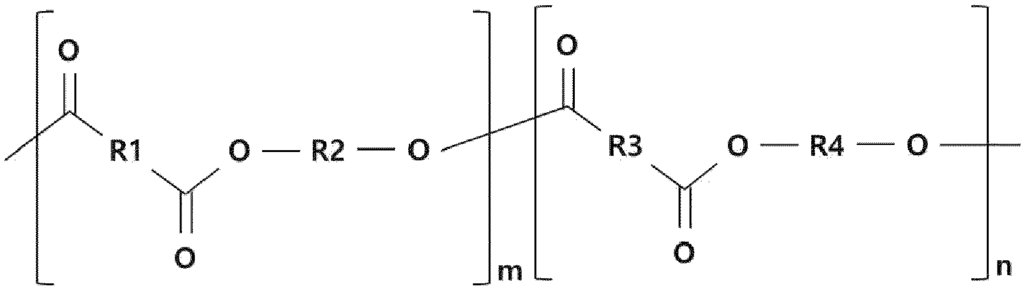

where R1 is a substituted or unsubstituted arylene group having 6 to 20 carbon atoms, R2 is a substituted or unsubstituted alkylene group having 1 to 20 carbon atoms, and m is 1 to 20. In addition, R3 and R4 are each independently a substituted or unsubstituted alkylene group having 1 to 20 carbon atoms, and n is 1 to 20.

The diol moiety may include the moiety of 1,4-butanediol or a derivative thereof, the aromatic dicarboxylic acid moiety may include the moiety of terephthalic acid or a derivative thereof, and the aliphatic dicarboxylic acid moiety may include the moiety of adipic acid or a derivative thereof. For example, the first biodegradable resin may include a first block including the moiety of 1,4-butanediol or a derivative thereof and the moiety of terephthalic acid or a derivative thereof. Alternatively, the first biodegradable resin may include a first block including the moiety of 1,4-butanediol or a derivative thereof and the moiety of dimethyl terephthalate or a derivative thereof. The first biodegradable resin may include a second block including the moiety of 1,4-butanediol or a derivative thereof and the moiety of adipic acid or a derivative thereof.

Alternatively, the first biodegradable resin may include a second block including the moiety of 1,4-butanediol or a derivative thereof and the moiety of succinic acid or a derivative thereof.

The first biodegradable resin may include the first block including the moiety of 1,4-butanediol or a derivative thereof and the moiety of terephthalic acid or a derivative thereof; and the second block including the moiety of 1,4-butanediol or a derivative thereof and the moiety of adipic acid or a derivative thereof.

The first block may be represented by Formula 4 below, and the second block may be represented by Formula 5 below:

Formula 4

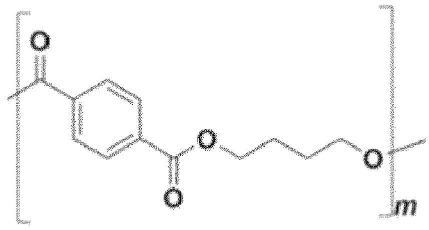

where m is 1 to 20.

Formula 5

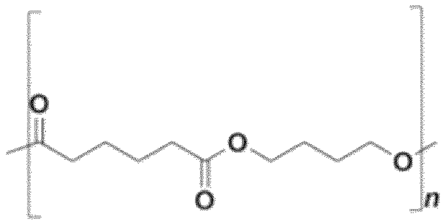

where n is 1 to 20.

The first biodegradable resin may be represented by Formula 6 below:

Formula 6

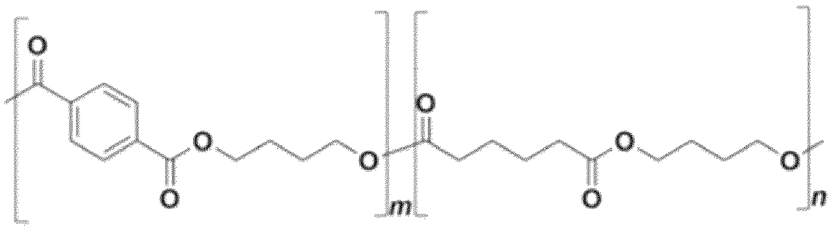

where m is 1 to 20, and n is 1 to 20.

When the first block and the second block satisfy the above configuration, it may be more advantageous to provide a biodegradable polyester sheet, film, or molded article with excellent biodegradability and water decomposability and improved physical properties.

In addition, when the first biodegradable resin includes the first block and the second block in the above ranges, the first biodegradable resin composition may have appropriate mechanical properties and appropriate UV resistance.

Since the first block and the second block have the above characteristics, the mechanical properties of the first biodegradable resin composition may be improved.

Since the first block and the second block have the above characteristics, the first biodegradable resin composition may have appropriate UV resistance.

Since the first block and the second block have the above characteristics, the first biodegradable resin composition may have a suitable biodegradation rate.

Since the first block and the second block have the above characteristics, the first biodegradable resin composition may have a suitable hydrolysis rate.

The first biodegradable resin may further include a branching agent. The branching agent may include a trivalent or higher alcohol and/or a trihydric or higher carboxylic acid. The branching agent may react with the diol, the aromatic dicarboxylic acid and the aliphatic dicarboxylic acid. Accordingly, the branching agent may be included as a part of the molecular structure of the first biodegradable resin.

The trivalent or higher alcohol may be at least one selected from the group consisting of glycerol, pentaerythritol and trimethylolpropane.

The trihydric or higher carboxylic acid may be at least one selected from the group consisting of methane tricarboxylic acid, ethanetricarboxylic acid, citric acid, benzene-1,3,5-tricarboxylic acid, 5-sulfo-1,2,4-benzenetricarboxylic acid, ethane-1,1,2,2-tetracarboxylic acid, propane-1,1,2,3-tetracarboxylic acid, butane-1,2,3,4-tetracarboxylic acid, cyclopentane-1,2,3,4-tetracarboxylic acid and benzene-1,2,4,5-tetracarboxylic acid.

About 0.1 wt% to about 5 wt% of the branching agent based on the total weight of the first biodegradable resin may be included in the first biodegradable resin. About 0.1 wt% to about 3 wt% of the branching agent based on the total weight of the first biodegradable resin may be included in the first biodegradable resin. About 0.1 wt% to about 1 wt% of the branching agent based on the total weight of the first biodegradable resin may be included in the first biodegradable resin.

Since the first biodegradable resin includes the branching agent in the above ranges, the first biodegradable resin composition may have appropriate mechanical properties and appropriate biodegradability.

Based on the total weight of the first biodegradable resin composition, the biodegradable resin may be included in a content of about 30 wt% or more, in a content of about 50 wt% or more, in a content of about 70 wt% or more, in a content of about 80 wt% or more, in a content of about 90 wt% or more, in a content of about 95 wt% or more or in a content of about 99 wt% or more. The maximum content of the biodegradable resin in the first biodegradable resin composition may be about 100 wt% based on the total weight of the first biodegradable resin composition.

The first biodegradable resin composition may further include a crystallization temperature regulator. The crystallization temperature regulator may control the crystallization temperature of the first biodegradable resin composition. The crystallization temperature regulator may be a reinforcing material capable of improving the mechanical properties of the first biodegradable resin composition and a film or molded article manufactured therewith. In addition, the crystallization temperature regulator may control the deformation characteristics of the first biodegradable resin composition by ultraviolet light. In addition, the crystallization temperature regulator may control the hydrolysis characteristics of the first biodegradable resin composition. In addition, the crystallization temperature regulator may control the biodegradability of the first biodegradable resin according to an embodiment of the present invention.

The crystallization temperature regulator may be a fiber derived from biomass. The crystallization temperature regulator may be a fiber made of an organic material. That is, the crystallization temperature regulator may be a fiber-based crystallization temperature regulator. The fiber-based crystallization temperature regulator may be nanocellulose.

The nanocellulose may be one or more selected from the group consisting of nanocrystalline cellulose, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose and cyclohexyl cellulose.

The nanocellulose may include an ion-bonded metal. The nanocrystalline cellulose may include an alkali metal. The nanocellulose may include a sodium element. In addition, the nanocellulose may include sulfate. The nanocellulose may include carboxylate. The nanocellulose may be a cellulose hydrogen sulfate sodium salt.

The nanocellulose may be represented by Formula 7 below:

Formula 7 $[(C_6H_{10}O_5)_xSO_3Na]_y$

wherein x may be 1 to 35, and y may be 1 to 10, or wherein x may be 15 to 35, and y may be 1 to 10.

The nanocellulose may have a specific surface area of about 200 $m^2/g$ to about 600 $m^2/g$ or a specific surface area of about 250 $m^2/g$ to about 500 $m^2/g$.

The nanocellulose may have a weight average molecular weight of about 10000 g/mol to about 40000 g/mol or about 11000 g/mol to about 35000 g/mol.

The nanocellulose may have a moisture content of about 2 wt% to about 8 wt%. The nanocellulose may have a moisture content of about 4 wt% to about 6 wt%.

The nanocellulose may have an average diameter of about 0.5 nm to about 20 nm. The nanocellulose may have an average diameter of about 1 nm to about 15 nm. The nanocellulose may have an average diameter of about 1.5 nm to about 12 nm. The nanocellulose may have an average diameter of about 2 nm to about 11 nm.

The average length of the nanocellulose may be about 20 nm to about 300 nm. The average length of the nanocellulose may be about 30 nm to about 500 nm. The average length of the nanocellulose may be about 30 nm to about 180 nm. The average length of the nanocellulose may be about 35 nm to about 150 nm. In an embodiment, the average length of the nanocellulose may be about 100 nm to about 300 nm.

The nanocellulose may have an aspect ratio (average length/average diameter) of about 10 to about 50. The aspect ratio of the nanocellulose may be about 20 to about 40. The aspect ratio of the nanocellulose may be about 25 to about 35.

Since the nanocellulose has the average diameter, average length and aspect ratio described above, the mechanical properties of the biodegradable resin composition according to an embodiment may be efficiently reinforced.

In particular, when the diameter and length of the nanocellulose satisfy the above ranges, the biodegradability

and properties of the first biodegradable resin or a biodegradable polyester sheet, film and molded article obtained using the first biodegradable resin may be further improved. The diameter and length of the nanocellulose may be measured by atomic force microscopy in a state of being dispersed in water.

The content of sulfur in the nanocellulose may be about 0.1 wt% to about 1.2 wt% based on the total amount of the nanocellulose. The content of sulfur in the nanocellulose may be about 0.75 wt% to about 1.1 wt% based on the total amount of the nanocellulose. In an embodiment, the content of sulfur in the nanocellulose may be about 0.5 wt% to about 1.5 wt% based on the total amount of the nanocellulose.

The content of sulfur in the nanocellulose may be measured according to ASTM D2622.

The nanocellulose may include a surface treatment agent. The surface treatment agent may include at least one selected from the group consisting of sulfate and carboxylate. That is, the nanocellulose may be surface-treated with a sulfate or a carboxylate surface treatment agent. The pH of the nanocellulose may be 5 to 7. The pH of the nanocellulose may be 6 to 7. The pH of the nanocellulose may be 5 to 8.

The zeta potential of the nanocellulose may be about -50 mV to about -25 mV. The zeta potential of the nanocellulose may be about -45 mV to about -30 mV. The zeta potential of the nanocellulose may be about - 60 mV to about -25 mV. The zeta potential of the nanocellulose may be about -55 mV to about -30 mV.

The zeta potential of the cellulose may be measured with a zeta potential meter (e.g., Zetasizer Nano ZS, Malvern).

The nanocellulose may be included in a content of about 0.01 parts by weight to about 2 parts by weight in the first biodegradable resin composition based on 100 parts by weight of the first biodegradable resin. The nanocellulose may be included in a content of about 0.03 parts by weight to about 1.5 parts by weight in the first biodegradable resin composition based on 100 parts by weight of the first biodegradable resin. The nanocellulose may be included in a content of about 0.04 parts by weight to about 1.2 parts by weight in the first biodegradable resin composition based on 100 parts by weight of the first biodegradable resin. The nanocellulose may be included in a content of about 0.05 parts by weight to about 1 part by weight in the first biodegradable resin composition based on 100 parts by weight of the first biodegradable resin.

Since the nanocellulose has the above characteristics, it may be uniformly dispersed in the first biodegradable resin composition.

Since the nanocellulose has the above characteristics, it may improve the mechanical properties of the first biodegradable resin composition.

In addition, the nanocellulose may function as a crystal nucleating agent to improve the crystallization rate of the first biodegradable resin composition. Accordingly, the nanocellulose may increase the crystallization temperature of the first biodegradable resin composition.

Since the nanocellulose has the above characteristics, the first biodegradable resin composition may have appropriate UV resistance.

Since the nanocellulose has the above characteristics, the first biodegradable resin composition may have a suitable biodegradation rate.

Since the nanocellulose has the above characteristics, the first biodegradable resin composition may have a suitable hydrolysis rate.

The first biodegradable resin composition may further include a germanium-based catalyst or a titanium-based catalyst. The germanium-based catalyst and the titanium-based catalyst may be added in a process of manufacturing the first biodegradable resin composition. The germanium-based catalyst and the titanium-based catalyst may affect the crystallinity of the first biodegradable resin composition. In addition, the germanium-based catalyst and the titanium-based catalyst are described in detail below.

The first biodegradable resin composition may include a metal salt.

The metal salt may be included in a content of about 0.1 ppm to about 1000 ppm, in a content of about 1 ppm to about 500 ppm, in a content of about 1 ppm to about 100 ppm or in a content of about 1 ppm to about 50 ppm based on the total weight of the first biodegradable resin composition. The metal salt may be at least one selected from the group consisting of nitrate, sulfate, hydrochloride, carboxylate and the like. The metal salt may be at least one selected from the group consisting of titanium salt, silicon salt, sodium salt, calcium salt, potassium salt, magnesium salt, copper salt, iron salt, aluminum salt, silver salt and the like. The metal salt may be at least one selected from the group consisting of magnesium acetate, calcium acetate, potassium acetate, copper nitrate, silver nitrate, sodium nitrate and the like.

The metal salt may include one or more selected from the group consisting of iron (Fe), magnesium (Mg), nickel (Ni), cobalt (Co), copper (Cu), palladium (Pd), zinc (Zn), vanadium (V), titanium, (Ti), indium (In), manganese (Mn), silicon (Si), and Tin (Sn).

In addition, the metal salt may be selected from the group consisting of acetate, nitrate, nitride, sulfide, sulfate, sulfoxide, hydroxide, hydrate, chloride, chlorinate and bromide.

Since the first biodegradable resin composition includes the metal salt in the above ranges, the hydrolysis rate and the biodegradation rate may be appropriately controlled.

The first biodegradable resin composition may further include a hydrolysis-resistant agent.

The hydrolysis-resistant agent may be at least one selected from silicon-based compounds such as silane, silazane and siloxane.

The hydrolysis-resistant agent may include alkoxy silane. The hydrolysis-resistant agent may include trimethoxy silane and/or triethoxy silane. The hydrolysis-resistant agent may include alkoxy silane containing an epoxy group. The hydrolysis-resistant agent may include at least one selected from the group consisting of 2-(3,4-epoxycyclohexyl) ethyltrimethoxysilane, 3-glycidoxypropyl methyldimethoxysilane, 3-glycidoxypropyl trimethoxysilane, 3-glycidoxypropyl methyldiethoxysilane and 3-glycidoxypropyl triethoxysilane.

The hydrolysis-resistant agent may be included in a content of about 1 ppm to about 10000 ppm, in a content of about 1 ppm to about 1000 ppm, in a content of about 5 ppm to 500 ppm, or in a content of about 10 ppm to 300 ppm, in the first biodegradable resin composition.

The hydrolysis-resistant agent may be bonded to the first biodegradable resin. The hydrolysis-resistant agent may be chemically bonded to the first biodegradable resin. The hydrolysis-resistant agent may be chemically bonded to a polymer contained in the first biodegradable resin. The hydrolysis-resistant agent may be coupled with a polymer contained in the first biodegradable resin.

Since the first biodegradable resin composition includes the hydrolysis-resistant agent in the above ranges, it may have appropriate hydrolysis resistance characteristics. In particular, since the first biodegradable resin according to an embodiment includes the hydrolysis-resistant agent in the above ranges, it may have appropriate initial hydrolysis characteristics and improved biodegradability.

The first biodegradable resin composition may further include a chain extender.

The chain extender may include isocyanate.

The chain extender may be at least one selected from the group consisting of monofunctional isocyanates and polyfunctional isocyanates.

The chain extender may be at least one selected from the group consisting of tolylene 2,4-diisocyanate, tolylene 2,6-diisocyanate, diphenylmethane 4,4'-diisocyanate and 2,4'-diisocyanate, naphthalene 1,5-diisocyanate, xylylene diisocyanate, hexamethylene diisocyanate, pentamethylene diisocyanate, isophorone diisocyanate and methylenebis(4-isocyanatocyclohexane).

The chain extender may include triisocyanate. The chain extender may include tri(4-isocyanatophenyl)methane.

The chain extender may include an acrylic polymer. The acrylic polymer may include an acrylic group. The acrylic group may be bonded as a side chain to a main chain. The acrylic polymer may include an epoxy group. The epoxy group may be bonded as a side chain to the main chain. The chain extender may include a styrene-based copolymer. The chain extender may include styrenic glycidyl acrylate.

The chain extender may be chemically bonded to the first biodegradable resin. The chain extender may be chemically bonded to a polymer contained in the first biodegradable resin. The chain extender may be bonded to the terminal of a polymer contained in the first biodegradable resin. In addition, the chain extender may be bonded to the terminals of three polymers contained in the first biodegradable resin.

The chain extender may be included in a content of about 0.1 wt% to about 10 wt%, in a content of about 0.2 wt% to about 8 wt% or in a content of about 0.3 wt% to about 7 wt% in the first biodegradable resin composition.

When the first biodegradable resin composition includes the chain extender in the above ranges, it may have appropriate hydrolysis resistance and appropriate biodegradability.

In addition, the chain extender may couple the polymer contained in the first biodegradable resin, so the proportion of high-molecular-weight polymers in the first biodegradable resin composition may be increased. Accordingly, the mechanical properties of the first biodegradable resin composition may be improved.

The first biodegradable resin composition may include a heat stabilizer. The heat stabilizer may be a phosphorus-based heat stabilizer.

The heat stabilizer may be at least one selected from the group consisting of amine-based high-temperature heat stabilizers such as tetraethylenepentamine, triethylphosphonoacetate, phosphoric acid, phosphorous acid, polyphosphric acid, trimethyl phosphate (TMP), triethyl phosphate, trimethyl phosphine, triphenyl phosphine, and the like.

In addition, the heat stabilizer may be an antioxidant having an antioxidant function.

The content of the heat stabilizer may be about 3000 ppm based on the total weight of the first biodegradable resin. The content of the heat stabilizer may be, for example, 10 ppm to 3,000 ppm, 20 ppm to 2,000 ppm, 20 ppm to 1,500 ppm or 20 ppm to 200 ppm, based on the total weight of the first biodegradable resin. When the content of the heat stabilizer satisfies the ranges, the deterioration of the polymer due to high temperature during the reaction process may be controlled, so that the terminal group of the polymer may be reduced and color may be improved. In addition, the heat stabilizer may suppress the activation of a titanium-based catalyst, etc., to control a reaction rate.

The first biodegradable resin composition may include an elongation improver. Examples of the elongation improver include an oil such as paraffin oil, naphthenic oil, or aromatic oil, or an adipate such as dibutyl adipate, diethylhexyl adipate, dioctyl adipate, or diisopropyl adipate.

The elongation improver may be included in a content of about 0.001 parts by weight to about 1 part by weight in the first biodegradable resin composition based on 100 parts by weight of the first biodegradable resin. The elongation improver may be included in a content of about 0.01 parts by weight to about 1 part by weight in the first biodegradable resin composition based on 100 parts by weight of the first biodegradable resin.

Since the elongation improver is included within the above ranges, the first biodegradable resin composition may have improved mechanical properties.

The first biodegradable resin composition may include an inorganic filler. The inorganic filler may be at least one selected from the group consisting of calcium sulfate, barium sulfate, talc, talcum powder, bentonite, kaolin, chalk powder, calcium carbonate, graphite, gypsum, electrically conductive carbon black, calcium chloride, iron oxide, aluminum oxide, potassium oxide, dolomite, silicon dioxide, wollastonite, titanium dioxide, silicate, mica, glass fiber, mineral fiber, and the like.

For the inorganic filler, the cumulative 50% particle size ($D_{50}$) based on volume in particle size distribution obtained by laser diffraction may be about 100 μm or less, about 85 μm or less, about 70 ,um or less, about 50 μm or less, about 25 μm or less, about 10 μm or less, about 5 μm or less, about 3 μm or less or about 1 μm or less.

In addition, the inorganic filler may have a specific surface area of about 100 $m^2/g$ or more. For example, the inorganic filler may have a specific surface area of about 100 $m^2/g$ or more, about 105 $m^2/g$ or more or about 110 $m^2/g$ or more.

The inorganic filler may be included in a content of about 3 parts by weight to about 50 parts by weight in the first biodegradable resin composition based on 100 parts by weight of the first biodegradable resin. The inorganic filler may be included in a content of about 5 parts by weight to about 30 parts by weight in the first biodegradable resin composition based on 100 parts by weight of the first biodegradable resin.

The inorganic filler may be included in a content of about 3,000 ppm or less based on the total weight of the first biodegradable resin composition. For example, the content of the inorganic filler may be about 3,000 ppm or less, about 1,500 ppm or less, about 1,200 ppm or less, about 800 ppm or less, about 600 ppm or less, about 50 ppm or more, about 100 ppm or more, about 130 ppm or more, about 150 ppm or more or about 180 ppm or more, based on the total weight of the first biodegradable resin composition.

Since the first biodegradable resin composition includes the inorganic filler in the above content ranges, the first biodegradable resin composition may have mechanical properties such as appropriate UV resistance, appropriate biodegradation rate and a suitable hydrolysis rate.

In addition, the number of carboxyl terminal groups in the first biodegradable resin composition may be about 20 eq/ton to about 60 eq/ton. In the first biodegradable resin composition, the number of the carboxyl terminal groups may be about 30 eq/ton to about 60 eq/ton. In the first biodegradable resin composition, the number of the carboxyl terminal groups may be about 30 eq/ton to about 50 eq/ton.

When the number of the carboxyl terminal groups is controlled into the above range and the first biodegradable resin composition is spun to form a yarn, deterioration may be prevented, and improved mechanical properties may be accomplished. When the number of the carboxyl terminal groups is in the above ranges, yarns produced with the first biodegradable resin composition may be easily fused to each other. In addition, when the number of the carboxyl terminal groups is in the above ranges, burrs may be prevented from occurring in yarns produced with the first biodegradable resin composition.

Processes of preparing the first biodegradable resin composition are as follows.

Referring to FIG. 4, an apparatus for preparing the first biodegradable resin includes a slurry agitator 100, an esterification supply line 200, a condensation polymerization supply line 300, a post-processer 400, a first recoverer 510 and a second recoverer 520.

A method of preparing the first biodegradable resin includes a step of preparing a first raw material composition containing the diol and the aromatic dicarboxylic acid.

The first raw material composition may be prepared as a slurry containing the diol and the aromatic dicarboxylic acid.

The step of preparing the slurry includes the step of mixing and treating the step of mixing and treating the diol and the aromatic dicarboxylic acid. That is, the step of preparing the slurry may be a pretreatment step before esterification reaction, and may be a step of mixing and slurrying the diol and the aromatic dicarboxylic acid.

The temperature of the slurry of The temperature of the slurry of the diol and the aromatic dicarboxylic acid may be about 5°C to about 15°C higher than the melting point of the diol. For example, when the diol is 1,4-butanediol, the temperature of the slurry may be about 35°C to about 45°C.

The diol and the aromatic dicarboxylic acid are fed into the slurry agitator 100 and stirred therein to produce the slurry.

By mixing and pretreating the diol and the aromatic dicarboxylic acid to form a slurry, the diol and the aromatic dicarboxylic acid may be uniformly reacted, and this may be effective in rapidly progressing the esterification reaction, thereby increasing reaction efficiency.

In particular, when an aromatic dicarboxylic acid, such as terephthalic acid, has complete crystallinity and is in powder form, its solubility in the diol is very low, making it difficult for a homogeneous reaction to occur. Therefore, the pretreatment process of slurrying may play a very important role in providing the first biodegradable resin, sheet, film, and molded article with excellent physical properties according to the embodiment of the present invention and improving reaction efficiency.

When the aromatic dicarboxylic acid is terephthalic acid, the terephthalic acid has perfect crystallinity and is a white crystal that sublimates around 300°C at normal pressure without a melting point. The solubility of the aromatic dicarboxylic acid in the diol is very low, making it difficult for a homogeneous reaction to occur. Accordingly, if a pretreatment process is performed before an esterification reaction, a uniform reaction may be induced by increasing the surface area for reaction with diol within a solid matrix of terephthalic acid.

In addition, when the aromatic dicarboxylic acid is dimethyl terephthalate, the dimethyl terephthalate may be made in a molten state at about 142°C to 170°C by the pretreatment process to react with the diol. Accordingly, the esterification reaction may proceed more quickly and efficiently.

Meanwhile, in the pretreatment step of preparing the slurry, the structure and properties of the first biodegradable resin may vary depending upon the particle size, particle size distribution, pretreatment reaction conditions, etc. of the aromatic dicarboxylic acid.

For example, the aromatic dicarboxylic acid may include terephthalic acid, and in particle size distribution (PSD), the terephthalic acid may have an average particle diameter (D50) of 10 μm to 400 μm, measured by a particle size analyzer Microtrac S3500, and may have a standard deviation of 100 or less for the average particle diameter (D50). The standard deviation means the square root of the variance. The average particle diameter (D50) of the terephthalic acid may be for example 20 μm to 200 μm, for example 30 μm to 200 μm, or for example 100 μm to 160 μm. When the average particle diameter (D50) of the terephthalic acid satisfies the ranges, it may be more advantageous in terms of improved solubility in diol and a reaction rate.

In the pretreatment process, the diol and the aromatic dicarboxylic acid may be mixed and fed into the slurry agitator 100 (tank).

The slurry agitator 100, for example, may have an anchor-type bottom and a height of 20 mm or more and an agitator. The agitator may be equipped with 3 or more rotating blades, which may be more advantageous in achieving an efficient stirring effect.

For example, a height to the slurry agitator 100 may be 20 mm or more, and the slurry supply line and the bottom of the agitator may be almost attached to each other. In this case, a slurry may be obtained without precipitation. If the shape, form, and rotating blades of the agitator do not meet the above conditions, the aromatic dicarboxylic acid may sediment to the bottom when diol and aromatic dicarboxylic acid are initially mixed. In this case, phase separation may occur.

The pretreatment process of preparing the slurry may include a step of mixing the diol and the aromatic dicarboxylic acid and agitating at about 30°C to about 100°C at about 50 rpm to about 200 for 10 minutes or more, for example 10 minutes to 200 minutes.

The diol may be added all at once or in divided doses. For example, the diol may be added separately when mixed with aromatic dicarboxylic acid and when mixed with aliphatic dicarboxylic acid.

The aromatic dicarboxylic acid may have the characteristics described above.

In the pretreatment step of preparing the slurry, a molar ratio of the diol to the aromatic dicarboxylic acid may be about 0.8:1 to about 2:1, about 1.1:1 to about 1.5:1, about 1.2:1 to about 1.8:1 or about 1.25:1 to about 1.6:1.

When the diol is added in a larger amount than the aromatic dicarboxylic acid, the aromatic dicarboxylic acid may be easily dispersed.

In addition, an additive may be added to the slurry. The nanocellulose and/or the metal salt may be added in the form of a dispersion or solution to the slurry.

The method of preparing the first biodegradable resin composition is to obtain a prepolymer by esterifying a slurry obtained by mixing and pretreating diol and aromatic dicarboxylic acid, and to perform a condensation polymerization reaction of the prepolymer. Accordingly, the structure and physical properties of the desired first biodegradable resin according to an embodiment of the present invention may be efficiently achieved.

The first raw material composition may have a viscosity of about 300 cP to about 1000 cP or a viscosity of about 400 cP to about 900 cP at about 35°C.

Since the first raw material composition has a viscosity in the above ranges, an esterification reaction may be effectively performed.

The method of preparing the first biodegradable resin composition includes a step of preparing a second raw material composition including the aliphatic dicarboxylic acid. The second raw material composition may include the diol and the aliphatic dicarboxylic acid.

In the second raw material composition, a molar ratio of the diol to the aliphatic dicarboxylic acid may be about 1.2:1 to about 1.6:1 or about 1.25:1 to about 1.5:1.

In addition, the second raw material composition may have a viscosity of about 300 cP to about 1000 cP or a viscosity of about 500 cP to about 1000 cP at about 35°C.

Since the second raw material composition has a molar ratio and viscosity in the above ranges, an esterification reaction may be effectively performed.

The method of preparing the first biodegradable resin may include a step of esterifying the first raw material composition and the second raw material composition to prepare a prepolymer. The first raw material composition and the second raw material composition may be reacted in the ester supply line.

In the esterification reaction, the reaction time may be shortened by using the first raw material composition and the second raw material composition. For example, the slurry obtained in the pretreatment step may shorten the reaction time of the esterification and the reaction time of a condensation polymerization described below.

The esterification reaction may be performed at least once.

In an embodiment, the esterification reaction may be performed batchwise after adding the second raw material composition to the first raw material composition. That is, the first raw material composition may be fed into the esterification supply line and the second raw material composition may be fed into the esterification supply line to perform the esterification reaction.

The second raw material composition may be added to the first raw material composition in the form of a slurry.

The esterification reaction may be performed at about 250°C or less for about 0.5 hours to about 6 hours. Specifically, the esterification reaction may be performed at about 180°C to about 250°C, about 185°C to about 240°C or about 200°C to about 240°C under normal or reduced pressure until water as a by-product theoretically reaches 95%. For example, the esterification reaction may be performed for 0.5 hours to 5.5 hours, 0.5 hours to 4.5 hours or 2 hours to 5 hours, but the present invention is not limited thereto.

In the esterification reaction, the total number of moles of diol added may be about 1.0 to about 1.8 or about 1.1 to about 1.6 compared to the total number of moles of the aromatic dicarboxylic acid and the aliphatic dicarboxylic acid.

In addition, the temperature of the second raw material composition including the diol and the aliphatic dicarboxylic acid may be about 5°C to about 15°C higher than the melting point of the diol.

In addition, various additives such as the nanocellulose may be added to the slurry of the diol and the aliphatic dicarboxylic acid.

In an embodiment, a first esterification reaction may be performed after feeding the first raw material composition into the esterification supply line. In addition, after the first esterification, the second raw material composition may be fed into the ester supply line, and a second esterification may be performed with a product of the first esterification.

The first esterification may be performed at 250°C or less for 0.25 hours to 4 hours. Specifically, the first esterification reaction may be performed at 180°C to 250°C, 185°C to 240°C or 200°C to 240°C under normal or reduced pressure until water as a by-product theoretically reaches 95%. For example, the first esterification reaction may be performed for 0.25 hours to 4 hours, 0.25 hours to 3.5 hours or 1.5 hours to 3 hours, but the present invention is not limited thereto

The second esterification may be performed at about 250°C or less for 0.25 hours to 3.5 hours.

Specifically, the second esterification reaction may be performed at 180°C to 250°C, 185°C to 240°C or 200°C to 240°C under normal or reduced pressure until water as a by-product theoretically reaches 95%. For example, the second esterification reaction may be performed for 0.5 hours to 3 hours, 1 hour to 2.5 hours or 1.5 hours to 3 hours, but the present invention is not limited thereto In the first esterification and the second esterification, a reaction temperature and a reaction time may be respectively controlled to adjust a number ratio of the first block to the second block, etc. In addition, when the esterification is divided into the first esterification and the second esterification, the entire esterification may be precisely controlled. Accordingly, when the esterification reactions are performed separately, the reaction stability and reaction uniformity of the esterification may be improved.

The prepolymer may have a number average molecular weight of about 500 to about 10000 g/mol. For example, the number average molecular weight of the prepolymer may be about 500 to about 8500 g/mol, about 500 to about 8000 g/mol, about 500 to about 7000 g/mol, about 500 g/mol to about 5000 g/mol, or about 1500 g/mol to about 4000 g/mol. When the number average molecular weight of the prepolymer satisfies the ranges, the molecular weight of a polymer in a condensation polymerization reaction may be efficiently increased.

The number average molecular weight may be measured using gel permeation chromatography (GPC). Specifically, data obtained by gel permeation chromatography includes several items such as Mn, Mw, and Mp, but the molecular weight may be measured based on the number average molecular weight (Mn).

The crystallization temperature regulator, the branching agent and/or the metal salt may be added together with the slurry before the esterification reaction. The crystallization temperature regulator, the branching agent and/or the metal salt may be fed into the esterification supply line 200 in the middle of the esterification reaction. The crystallization temperature regulator, the branching agent and/or the metal salt may be added to the esterification product after the esterification reaction. In addition, the crystallization temperature regulator, the branching agent and/or the metal salt may be added together with the aliphatic dicarboxylic acid. In addition, the crystallization temperature regulator, the

branching agent and/or the metal salt may be fed into the esterification supply line 200 after the first esterification and the second esterification.

Since the crystallization temperature regulator and/or the metal salt are fed into the esterification reaction, the crystallization temperature regulator and/or the metal salt may be uniformly dispersed in the first biodegradable resin.

The crystallization temperature regulator may have the above-described characteristics. In particular, the nanocellulose may be used as the crystallization temperature regulator.

The nanocellulose may be pretreated by a bead mill, ultrasonic waves, or high-speed dispersion at about 1000 rpm to about 1500 rpm before being added. Specifically, the nanocellulose may be water-dispersed nanocellulose pretreated with a bead mill or pretreated with ultrasonic waves. First, the bead mill pretreatment may be performed using a vertical mill or horizontal mill as a wet milling device. A horizontal mill is preferable because it allows for a larger number of beads to be filled inside the chamber, reduces uneven wear of the machine, reduces bead wear, and makes maintenance easier, but the present invention is not limited thereto

The bead mill pretreatment may be performed using one or more beads selected from the group consisting of zirconium, zircon, zirconia, quartz and aluminum oxide.

Specifically, the bead mill pretreatment may be performed using beads having a diameter of about 0.3 mm to about 1 mm. For example, the diameter of the bead may be about 0.3 mm to about 0.9 mm, about 0.4 mm to about 0.8 mm, about 0.45 mm to about 0.7 mm or about 0.45 mm to about 0.6 mm.

When the diameter of the bead satisfies the ranges, the dispersibility of nanocellulose may be further improved. When the diameter of the beads exceeds the ranges, the average particle size and particle size deviation of nanocellulose may increase, resulting in lower dispersibility.

In addition, for the bead mill pretreatment, it is preferable to use beads with a specific gravity higher than that of nanocellulose because sufficient energy may be transferred. For example, the beads may be one or more selected from the group consisting of zirconium, zircon, zirconia, quartz and aluminum oxide which have a specific gravity higher than that of water-dispersed nanocellulose, and zirconium beads with a specific gravity more than 4 times higher than that of the water-dispersed nanocellulose are preferred, but the present invention is not limited thereto In addition, the ultrasonic pretreatment is a method of physically breaking or pulverizing nanoparticles with waves generated by emitting 20 kHz ultrasound into a solution.

The ultrasonic pretreatment may be performed for less than 30 minutes at an output of 30000 J/s or less. For example, the ultrasonic pretreatment may be performed at an output of 25000 J/s or less or 22000 J/s or less for 25 minutes or less, 20 minutes or less or 18 minutes or less. When the output and execution time satisfy the above ranges, the effect of ultrasonic pretreatment, i.e., the improvement in dispersibility, may be maximized. When the energy amount exceeds the above range, nanoparticles may re-agglomerate and the dispersibility may be lowered.

The nanocellulose according to an embodiment may be pretreated with a bead mill or may be ultrasonically pretreated. Alternatively, the nanocellulose according to an embodiment may have been subjected to both bead mill pretreatment and ultrasonic pretreatment. Here, it is preferable that ultrasonic pretreatment is performed after bead mill pretreatment so as to prevent reagglomeration and improve dispersibility.

The nanocellulose according to an embodiment may be pretreated with a bead mill or ultrasonically pretreated. Alternatively, the nanocellulose according to an embodiment may have been subjected to both bead mill pretreatment and ultrasonic pretreatment. Here, it is preferable that ultrasonic pretreatment is performed after bead mill pretreatment so as to prevent reagglomeration and improve dispersibility.

Since the nanocellulose includes an ion-bonded metal, it has very high dispersibility in water. In addition, by the bead mill pretreatment and/or the ultrasonic pretreatment, an aqueous dispersion with a very high degree of dispersion of the nanocellulose may be obtained. In the nanocellulose an aqueous dispersion, the content of the nanocellulose may be about 1 wt% to about 50 wt%.

In the esterification reaction, a titanium-based catalyst and/or a germanium-based catalyst may be used. Specifically, the titanium-based catalyst and/or germanium-based catalyst may be added to the slurry, and the esterification reaction may proceed.

In addition, before the first esterification reaction, the titanium-based catalyst and/or the germanium-based catalyst may be added to the slurry, and the titanium-based catalyst and/or the germanium-based catalyst may be further added to the product of the first esterification reaction.

The first biodegradable resin may include one or more titanium-based catalysts selected from the group consisting of titanium isopropoxide, antimony trioxide, dibutyltin oxide, tetrapropyl titanate, tetrabutyl titanate, tetraisopropyl titanate, antimony acetate, calcium acetate and magnesium acetate, or one or more germanium-based catalysts selected from the group consisting of germanium oxide, germanium methoxide, germanium ethoxide, tetramethyl germanium, tetraethyl germanium and germanium sulfide.

In addition, the content of the catalyst may be about 100 ppm to 1000 ppm based on the total weight of diol, aromatic dicarboxylic acid, and aliphatic dicarboxylic acid. For example, about 100 ppm to about 800 ppm, about 150 ppm to about 700 ppm, about 200 ppm to about 600 ppm or about 250 ppm to about 950 ppm of a titanium-based

catalyst or a germanium-based catalyst may be included. As the content of the catalyst satisfies the range, properties may be further improved.

In addition, the heat stabilizer may be added together with the slurry before the esterification reaction. The heat stabilizer may be fed into the esterification supply line 200 in the middle of the esterification reaction. The heat stabilizer may be fed into the esterification product after the esterification reaction. In addition, the heat stabilizer may be added together with the aliphatic dicarboxylic acid. In addition, the heat stabilizer may be fed into the esterification supply line 200 after the first esterification and before the second esterification.

The characteristics of the heat stabilizer may be the same as described above.

The content of the heat stabilizer may be 3,000 ppm or less based on the total weight of diol, aromatic dicarboxylic acid, and aliphatic dicarboxylic acid. Specifically, the content of the heat stabilizer may be, for example, 10 ppm to 3,000 ppm, 20 ppm to 2,000 ppm, 20 ppm to 1,500 ppm or 20 ppm to 200 ppm based on the total weight of diol, aromatic dicarboxylic acid, and aliphatic dicarboxylic acid. As the content of the heat stabilizer satisfies the range, the deterioration of the polymer due to high temperature during the reaction process may be controlled, so the terminal groups of the polymer may be reduced and the color may be improved.

After completion of the esterification reaction, at least one selected from the group consisting of additives such as silica, potassium or magnesium, and color correctors such as cobalt acetate may be further added to the esterification reaction product. That is, after completion of the esterification reaction, the additive and/or a color corrector may be added and stabilized, and then a condensation polymerization reaction may be performed. The additive and/or the color corrector may be added after completion of the esterification reaction, and may be fed into together with the prepolymer into the condensation polymerization supply line 300. Accordingly, the additive and/or the color corrector may be uniformly dispersed in the first biodegradable resin.

In addition, after completion of the esterification reaction, the inorganic filler may be added to the esterification reaction product. That is, after completion of the esterification reaction, the inorganic filler is added and stabilized, and then the condensation polymerization reaction may proceed. The characteristics of the inorganic filler are the same as described above. The inorganic filler may be fed together with the prepolymer into the condensation polymerization supply line 300, the condensation polymerization process may proceed. Accordingly, the inorganic filler may be uniformly dispersed in the first biodegradable resin.

In addition, the first recoverer 510 recovers reaction by-products such as water from the esterification supply line 200. The first recoverer 510 may apply vacuum pressure to the esterification supply line 200 or perform reflux to recover by-products generated in the esterification reaction.

The method of preparing the first biodegradable resin includes a step of condensation-polymerizing the prepolymer. The condensation polymerization reaction may proceed as follows. The prepolymer is fed into the condensation polymerization supply line 300. In addition, the crystallization temperature regulator, the heat stabilizer, at least one of the color corrector, the inorganic filler, the metal salt and other additives may be fed together with the prepolymer into the condensation polymerization supply line 300.

In addition, the prepolymer may be fed into the condensation polymerization supply line, and the condensation polymerization reaction of the prepolymer may proceed.

The condensation polymerization reaction may be performed at about 180°C to about 280°C and about 10 torrs or less for about 1 hour to about 3 hours. For example, the condensation polymerization reaction may be performed at about 190°C to about 270°C, about 210°C to about 260°C or about 230°C to about 255°C under about 0.9 torrs or less, about 0.7 torrs or less, about 0.2 torrs to about 10 torrs, about 0.2 torrs to about 0.9 torrs or about 0.2 torrs to about 0.6 torrs for about 1.5 hours to about 3 hours, about 1.5 hours to about 3 hours or about 1.5 hours to about 2.5 hours.

In addition, the condensation polymerization reaction may include first condensation polymerization and second condensation polymerization.

For example, the first condensation polymerization may be performed at about 260°C or less, about 250°C or less, about 215°C to about 250°C, about 215°C to about 245°C or about 230°C to about 245°C under about 1 torr to about 200 torrs, about 2 torrs to about 100 torrs, about 4 torrs to about 50 torrs, about 5 torrs to about 45 torrs or about 8 torrs to about 32 torrs for about 0.5 hours to about 2 hours, about 0.5 hours to about 1.5 hours or about 0.5 hours to about 1 hour.

In addition, the second condensation polymerization may be performed at about 220°C to about 265°C, about 230°C to about 260°C or about 235°C to about 255°C under about 1 torr or less, about 0.8 torrs or less, about 0.6 torrs or less, about 0.1 torrs to about 1 torr, about 0.2 torrs to about 0.8 torrs or about 0.2 torrs to about 0.6 torrs for about 0.5 hours to about 2 hours, about 0.5 hours to about 1.5 hours or about 1 hour to about 1.5 hours.

In addition, before the condensation polymerization reaction, a titanium-based catalyst or a germanium-based catalyst may be further added to the prepolymer. In addition, before the condensation polymerization reaction, one or more types selected from the group consisting of additives such as silica, potassium or magnesium; amine-based stabilizers such as trimethyl phosphate, triphenyl phosphate, trimethyl phosphine, phosphoric acid, phosphorous acid, or tetraethylenepentamine; and polymerization catalysts such as antimony trioxide, antimony trioxide, or tetrabutyl titanate

may be further added to the prepolymer.

The polymer may have a number average molecular weight of about 10000 g/mol to about 60000 g/mol, about 15000 g/mol to about 50000 g/mol, about 15000 g/mol to about 40000 g/mol, about 20000 g/mol to about 35000 g/mol or about 20000 g/mol to about 30000 g/mol. When the number average molecular weight of the polymer satisfies the ranges, the first biodegradable resin composition may be easily spun.

In addition, the second recoverer 520 recovers reaction by-products such as water from the condensation polymerization supply line 300. The second recoverer 520 may apply vacuum pressure to the condensation polymerization supply line 300, and may recover by-products generated from the condensation polymerization reaction.

The second recoverer 520 may apply a vacuum pressure of about 0.1 torrs to about 1 torr or a vacuum pressure of about 0.1 torrs to about 0.9 torrs to the interior of the condensation polymerization supply line 300.

Next, the hydrolysis-resistant agent and/or the chain extender is added to the polymer. Next, the polymer, the hydrolysis-resistant agent and the chain extender are uniformly mixed, and maintained at about 200°C to about 260°C for about 1 minute to about 15 minutes. Accordingly, the polymer reacts with the hydrolysis-resistant agent and/or the chain extender.

Alternatively, the hydrolysis-resistant agent and/or the chain extender may be added to the condensation polymerization supply line 300 through a static mixer and may react with the polymer. A reaction temperature of the hydrolysis-resistant agent and/or the chain extender in the condensation polymerization supply line 300 may be about 200°C to about 260°C. In addition, a reaction time of the hydrolysis-resistant agent and/or the chain extender in the condensation polymerization supply line 300 may be about 1 minute to about 15 minutes.

The hydrolysis-resistant agent may have the characteristics described above.

The chain extender may have the characteristics described above.

Accordingly, the first biodegradable resin composition may have a suitable degree of hydrolysis and a high biodegradability.

Next, pellets may be manufactured from the polymer.

Specifically, the polymer may be cooled to about 15°C or less, about 10°C or less or about 6°C or less, and then the cooled polymer may be cut, thereby producing pellets. Alternatively, the polymer may be cut at about 40°C to about 60°C.

The cutting step may be performed without limitation using any pellet cutting machine used in this industry, and the pellets may have various shapes. The pellet-cutting method may include an underwater cutting method or a strand-cutting method.

The pellets may undergo additional post-treatment processes. The pellets may be put into the post-processer 400, and the post-processing process may proceed.

The post-processing process may be performed in the post-processer 400. The pellets are fed into the post-processer 400. Next, the post-processer 400 may melt the fed pellets by frictional heat and re-extrude them. That is, the post-processer 400 may include an extruder such as a twin-screw extruder.

The temperature of the post-processing process may be about 230°C to about 270°C. The temperature of the post-processing process may be about 230°C to about 260°C. The temperature of the post-processing process may be about 240°C to about 265°C. The temperature of the post-processing process may be about 240°C to about 260°C.

The time of the post-processing process may be about 30 seconds to about 3 minutes. The post-processing process time may be about 50 seconds to about 2 minutes. The post-processing process time may be about 1 minute to about 2 minutes.

Next, a resin extruded by the extruder may be cooled, cut, and processed into post-treated pellets.

That is, the resin extruded from the extruder may be reprocessed into pellets through the cutting step described above.

The crystallinity of the pellets may be improved in the post-processing process.

The biodegradability of the first biodegradable resin composition may be measured by the following method.

To measure the biodegradability, the biodegradable resin composition according to an embodiment was mixed with compost, and an accelerated biodegradation test was performed at 60°C and a humidity of 90%. After a certain time, gel permeation chromatography (GPC) was used to measure the number average molecular weight of the first biodegradable resin composition. The biodegradability was derived by dividing a difference between an initial number average molecular weight and a number average molecular weight after biodegradation for a certain time by the initial number average molecular weight.

The biodegradability may be represented by Equation 1 below:

Equation 1

$$\text{Biodegradability (\%)} = \frac{\text{Initial number average molecular weight - Number average molecular weight after biodegradation}}{\text{Initial number average molecular weight}} \times 100$$

Here, the first biodegradable resin composition is mixed with compost and subjected to an accelerated biodegradation test at a temperature of 60°C and a humidity of 90% for a certain time. The initial number average molecular weight of the first biodegradable resin composition before performing an accelerated biodegradation test and the number average molecular weight of the first biodegradable resin composition that has been subjected to the accelerated biodegradation test for a certain time were measured by gel permeation chromatography (GPC).

The biodegradability was derived by dividing a difference between an initial number average molecular weight and a number average molecular weight after biodegradation for a certain time by the initial number average molecular weight.

In addition, the compost may include about 40 wt% of pig manure, about 15 wt% of chicken manure, about 37 wt% of sawdust, about 5 wt% of zeolite and about 3 wt% of a microbial agent. In addition, the manufacturer of the compost is Taeheung F&G, and the product name of the compost is Geosaengto (grade 1 compost by-product fertilizer).

In addition, to measure the biodegradability, the first biodegradable resin composition is manufactured into a sheet having a thickness of about 300 μm. Next, the manufactured sheet is cut into a size of about 30 mm×30 mm to produce flakes. The flakes may be mixed with the compost, and the accelerated biodegradation test may be performed.

In the first biodegradable resin composition, the biodegradability after one week may be about 40% to about 70%, about 45% to about 65%, about 47% to about 63% or about 49% to about 62%.

In the first biodegradable resin composition, the biodegradability after two weeks may be about 50% to about 70% or about 55% to about 68%.

In the first biodegradable resin composition, the biodegradability after three weeks may be about 63% to about 75% or about 63% to about 73%.

In the first biodegradable resin composition, the biodegradability after four weeks may be about 73% to about 85% or about 75% to about 82%.

In the first biodegradable resin composition, the biodegradability after six weeks may be about 80% to about 90% or about 82% to about 88%.

In the first biodegradable resin composition, the biodegradability after nine weeks may be greater than about 85%, greater than about 87%, greater than about 88%, greater than about 89% or greater than about 90%.

The hydrolysis degree of the first biodegradable resin composition may be measured by the following method.

To measure a hydrolysis degree, the biodegradable resin composition according to an embodiment is immersed in water (100% RH) at 80°C, and then an accelerated hydrolysis test is performed. After a certain time, gel permeation chromatography (GPC) is used to measure the number average molecular weight of the first biodegradable resin composition. The hydrolysis degree was derived by dividing a difference between an initial number average molecular weight and a number average molecular weight after hydrolysis for a certain time by the initial number average molecular weight.

The biodegradability may be represented by Equation 2 below:

Equation 2

$$\text{Hydrolysis degree (\%)} = \frac{\text{Initial number average molecular weight - Number average molecular weight after hydrolysis}}{\text{Initial number average molecular weight}} \times 100$$

Here, the first biodegradable resin composition is immersed in water at 80°C, and then subjected to an accelerated hydrolysis test for a certain time. The initial number average molecular weight of the first biodegradable resin composition before performing an accelerated hydrolysis test and the number average molecular weight of the first biodegradable resin composition that has been subjected to the accelerated hydrolysis test for a certain time were measured by gel permeation chromatography (GPC).

The hydrolysis degree was derived by dividing a difference between an initial number average molecular weight and a number average molecular weight after hydrolysis for a certain time by the initial number average molecular weight.

In addition, to measure the hydrolysis degree, the first biodegradable resin composition was manufactured into a sheet having a thickness of about 300 μm Next, the manufactured sheet was cut into a size of about 30 mm×30 mm to produce flakes. The flakes were immersed in warm water, and the accelerated hydrolysis test was performed.

In the first biodegradable resin composition, the hydrolysis degree after one week may be about 40% to about 65% or about 45% to about 63%.

In the first biodegradable resin composition, the hydrolysis degree after two weeks may be about 80% to about 93% or about 85% to about 92%.

In the first biodegradable resin composition, the hydrolysis degree after three weeks may be about 90% to about 97% or about 91% to about 96%.

In the first biodegradable resin composition, the hydrolysis degree after four weeks may be about 92% to about 99% or about 93% to about 97%.

In the first biodegradable resin composition, the hydrolysis degree after six weeks may be greater than about 94% or greater than about 95%.

In the first biodegradable resin composition, the hydrolysis degree after nine weeks may be greater than about 95% or greater than about 96%.

Since the first biodegradable resin composition has a hydrolysis degree and hydrolysis increase rate in the above ranges, the first biodegradable resin composition may have adequate durability in everyday life areas and may be easily hydrolyzed when discarded. That is, since the first biodegradable resin composition has a hydrolysis degree and hydrolysis increase rate in appropriate ranges, it may have sufficient hydrolysis resistance when used for a suitable period for yarn, etc. In addition, the first biodegradable resin composition may be easily decomposed by hydrolysis, biodegradation, etc. after a sufficient period, when discarded not only in the soil, but also in the river or the sea.

In addition, the first biodegradable resin composition may have an acid value of about 0.01 mg KOH/g to about 3 mg KOH/g, about 0.1 mg KOH/g to about 2.5 mg KOH/g or about 0.1 mg KOH/g to about 2.3 mg KOH/g.

Since the first biodegradable resin composition has an acid value in the above ranges, it may have the same hydrolysis characteristics and biodegradability properties as above.

In addition, the first biodegradable resin composition may have surface tension, water contact angle, diiodo methane contact angle, surface free energy, dispersion and polarity.

The surface tension, the water contact angle, the diiodo methane contact angle, the surface free energy, the dispersion and the polarity may be measured on the surface of the polyester sheet.

In the first biodegradable resin composition, the surface tension may be about 30 dyne to about 55 dyne. In the first biodegradable resin composition, the surface tension may be about 35 dyne to about 50 dyne.

In the first biodegradable resin composition, the water contact angle may be about 60° to about 90°, about 65° to about 85° or about 67° to about 80°.

In the first biodegradable resin composition, the diiodo methane contact angle may be about 20° to about 40° or about 20° to about 35°.

In the first biodegradable resin composition, the surface free energy may be about 40 mN/m to about 60 mN/m or about 42 mN/m to about 55 mN/m.

In the first biodegradable resin composition, the dispersion may be about 35 mN/m to about 55 mN/m or about 40 mN/m to about 50 mN/m.

In the first biodegradable resin composition, the polarity may be about 2 mN/m to about 8 mN/m or about 3 mN/m to about 7 mN/m.

The first biodegradable resin composition may have a surface tension, water contact angle, diiodo methane contact angle, surface free energy, dispersion and polarity in the above ranges due to the compositions of the first biodegradable resin, the oligomer, the crystallization temperature regulator, the chain extender, the metal salt, the hydrolysis-resistant agent, the heat stabilizer and the like, and processes such as the esterification reaction, the condensation polymerization reaction, the chain extension reaction and the heat treatment reaction. Accordingly, the first biodegradable resin composition may have a suitable degree of hydrolysis and appropriate biodegradability.

In addition, since the first biodegradable resin composition has the above-described surface characteristics, the biodegradable yarn according to an embodiment may be made of non-woven fabric, etc. and may easily absorb moisture, etc. from the outside.

The first biodegradable resin composition may have a crystallization temperature of about 50°C to about 90°C, a crystallization temperature of about 45°C to about 90°C, a crystallization temperature of about 50°C to about 80°C, a crystallization temperature of about 40°C to about 80°C, a crystallization temperature of about 50°C to about 75°C or a crystallization temperature of about 55°C to about 75°C.

In addition, the first biodegradable resin composition may have a crystallization temperature of about 50°C to about 130°C, a crystallization temperature of about 45°C to about 130°C, a crystallization temperature of about 50°C to about 120°C, a crystallization temperature of about 50°C to about 115°C or a crystallization temperature of about 55°C to about 110°C.

In addition, the crystallization temperature of the first biodegradable resin composition may be 90 °C to 130 °C, 95 °C to 130 °C, 95 °C to 120 °C, or 95 °C to 110 °C. When the ranges are satisfied, a yarn of a biodegradable non-woven fabric made from the first biodegradable resin composition may not be broken, may include a short fiber or long

fiber with a uniform diameter, and may have improved tensile strength and elongation.

The first biodegradable resin composition may have a melting temperature. The first biodegradable resin composition may have a melting temperature of 120 °C to 200 °C, 130 °C to 200 °C, 150 °C to 200 °C, or 150 °C to 190 °C. When satisfying the ranges, a biodegradable non-woven fabric made from the first biodegradable resin composition may have improved tensile strength and elongation.

The melting temperature may be measured according to the method for measuring crystallization temperature described above.

A difference between the melting temperature of the first biodegradable resin composition and the crystallization temperature thereof may be 30 °C to 90 °C, 30 °C to 85 °C, 35 °C to 80 °C, or 40 °C to 75 °C. A difference between the melting temperature of the first biodegradable resin composition and the crystallization temperature thereof may be an indicator of the crystallization rate of the first biodegradable resin composition. When satisfying the ranges, excellent radioactivity of the first biodegradable resin composition may be secured and the occurrence of plying between manufactured biodegradable yarns may be suppressed.

The crystallization temperature may be measured by differential scanning calorimetry (DSC). In the process of increasing the temperature from 40°C to 180°C at a rate of about 10°C/min and then cooling to -50°C at a rate of 10°C/min, the crystallization temperature (°C) of the first biodegradable resin composition may be measured by the differential scanning calorimetry.

The crystallization temperature may be measured according to ASTM D3417. Specifically, to measure the crystallization temperature, the crystallization temperature was raised from 40 °C to 200 °C at a rate of 10 °C/min using differential scanning calorimetry (DSC), and then isothermal for 5 minutes to perform the first thermal history removal process, and then cooled from 200 °C to -50 °C at a rate of 10 °C/min and isothermal for 5 minutes to perform the second cooling process. Since the first biodegradable resin composition has a crystallization temperature in the above ranges, it may be easily extruded and quickly crystallized in a yarn manufacturing process. Accordingly, the biodegradable yarn according to an embodiment may be easily manufactured.

The first biodegradable resin composition may have a melt index.

The first biodegradable resin composition may have a melt index of about 4 g/10 minutes to about 40 g/10 minutes at about 190°C. The first biodegradable resin composition may have a melt index of about 5 g/10 minutes to about 35 g/10 minutes at about 190°C. The first biodegradable resin composition may have a melt index of about 6 g/10 minutes to about 30 g/10 minutes at about 190°C.

The first biodegradable resin composition may have a melt index of about 16 g/10 minutes to about 80 g/10 minutes at about 230°C. The first biodegradable resin composition may have a melt index of about 17 g/10 minutes to about 75 g/10 minutes at about 230°C. The first biodegradable resin composition may have a melt index of about 18 g/10 minutes to about 70 g/10 minutes at about 230°C. The first biodegradable resin composition may have a melt index of about 20 g/10 minutes to about 90 g/10 minutes at about 230°C.

The first biodegradable resin composition may have a melt index of about 40 g/10 minutes to about 120 g/10 minutes at about 250°C. The first biodegradable resin composition may have a melt index of about 25 g/10 minutes to about 110 g/10 minutes at about 250°C. The first biodegradable resin composition may have a melt index of about 40 g/10 minutes to about 110 g/10 minutes at about 250°C. The first biodegradable resin composition may have a melt index of about 40 g/10 minutes to about 100 g/10 minutes at about 250°C.

Since the first biodegradable resin composition has a melt index in the above ranges, it may have improved spinning processability. Since the first biodegradable resin composition has a melt index in the above ranges, agglomeration or breakage may be prevented due to an improved spinning process.

The first biodegradable resin composition may have a melt index decrease (MID). The MID may be derived by Equation 3 below:

Equation 3

$$MID = (MI2 - MI1)/(T2 - T1)$$

where T1 is 190°C, T2 is 250°C, MI1 is a melt index when the temperature of the first biodegradable resin composition is T1, and MI2 is a melt index when the temperature of the first biodegradable resin composition is T2.

the MID of the first biodegradable resin composition may be about 0.4 g/10 minutes.°C to about 1.5 g/10 minutes. °C. The MID of the first biodegradable resin composition may be about 0.3 g/10 minutes.°C to about 1.5 g/10 minutes.°C. The MID of the first biodegradable resin composition may be about 0.5 g/10 minutes.°C to about 1.4 g/10 minutes·°C. The MID of the first biodegradable resin composition may be about 0.6 g/10 minutes.°C to about 1.3 g/10 minutes·°C. Since the first biodegradable resin composition has MID in the above ranges, it may be easily spun at a high temperature,

and it may have appropriate mechanical strength at a low temperature. Accordingly, the first biodegradable resin composition may implement improved processibility when manufacturing a yarn.

The second biodegradable resin composition may include a second biodegradable resin.

The second biodegradable resin may be at least one selected from the group consisting of polybutylene succinate, polylactic acid, polybutylene adipate, polybutylene succinate-adipate, polybutylene succinate-terephthalate, polyhydroxybutyrate-valerate, polycaprolactone, polybutylene succinate adipate terephthalate and thermoplastic starch.

The second biodegradable resin may include polylactic acid.

The polylactic acid may be a high-melting-point polylactic acid having a stereo complex crystal.

In addition, the polylactic acid may be formed by solution mixing or melt mixing of poly L-lactic acid and poly D-lactic acid.

The polylactic acid may include a unit represented by Formula 8 below:

Formula 8

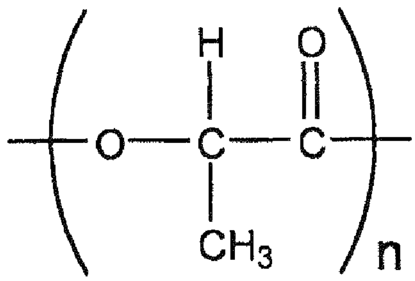

where the polylactic acid is a polymer including an L-lactic acid unit and/or a D-lactic acid unit.

The polylactic acid may include poly L-lactic acid and/or poly D-lactic acid.

The poly L-lactic acid may be a polymer mainly containing an L-lactic acid unit. The poly L-lactic acid may include an L-lactic acid unit in a content of about 90 mol% to about 100 mol%, about 95 mol% to about 100 mol% or about 97 mol% to about 100 mol%. The poly L-lactic acid may include a D-lactic acid unit and/or a unit other than lactic acid. The poly L-lactic acid may include the D-lactic acid unit and/or a unit other than lactic acid in a content of about 0 mol% to about 10 mol%, about 0 mol% to about 5 mol% or about 0 mol% to about 3 mol%.

The poly D-lactic acid may be a polymer mainly containing a D-lactic acid unit. The poly D-lactic acid may include the D-lactic acid unit in a content of about 90 mol% to about 100 mol%, about 95 mol% to about 100 mol% or about 97 mol% to about 100 mol%. The poly D-lactic acid may include the L-lactic acid unit and/or a unit other than lactic acid. The poly D-lactic acid may include the L-lactic acid unit and/or a unit other than lactic acid in a content of about 0 mol% to about 10 mol%, about 0 mol% to about 5 mol% or about 0 mol% to about 3 mol%.

The unit other than lactic acid may be a unit derived from dicarboxylic acid, polyhydric alcohol, hydroxycarboxylic acid, lactone, etc., which have a functional group capable of forming two or more ester bonds, or a unit derived from various polyesters, various polyethers, and various polycarbonates composed of various components.

Examples of the dicarboxylic acid include, for example, aliphatic polyhydric alcohols such as succinic acid, adipic acid, azelaic acid, sebacic acid, terephthalic acid, isophthalic acid, and the like. Examples of the polyhydric alcohol include ethylene glycol, propylene glycol, butanediol, pentanediol, hexanediol, octanediol, glycerin, sorbitan, neopentyl glycol, diethylene glycol, riethylene glycol, polyethylene glycol, and polypropylene glycol, aromatic polyhydric alcohols obtained by adding ethylene oxide to bisphenol, and the like.

Examples of the hydroxycarboxylic acid include glycolic acid, hydroxybutyric acid, and the like. Examples of lactone include, for example, glycolide, ε-caprolactone glycolide, ε-caprolactone, β-propiolactone, δ-butyrolactone, β- or γ-butyrolactone, pivalolactone, δ-valerolactone, and the like. The polylactic acid is commercially available from Biomer, Inc. under the name BIOMER)™ L9000. In addition, the polylactic acid is commercially available from Natureworks LLC (NATUREWORKS®) or Mitsui Chemical (LACEA™). In addition, the polylactic acid may be described in US Patent Nos. 4,797,468, 5,470,944, 5,770,682, 5,821,327, 5,880,254 and 6,326,458, which are incorporated herein by reference in their entirety for all purposes.

The melting point of the polylactic acid may be about 100°C to about 240°C. The melting point of the polylactic acid may be about 120°C to about 220°C. The melting point of the polylactic acid may be about 140°C to about 200°C. The melting point of the polylactic acid may be about 140°C to about 180°C.

The crystallization temperature (Tc) of the polylactic acid may be about 50°C to about 80°C. The crystallization temperature (Tc) of the polylactic acid may be about 55°C to about 75°C.

The glass transition temperature (Tg) of the polylactic acid may be about 20°C to about 80°C. The glass

transition temperature (Tg) of the polylactic acid may be about 30°C to about 70°C. The glass transition temperature of the polylactic acid may be about 40°C to about 65°C. The melting point and the glass transition temperature may be measured by differential scanning calorimetry (DSC) according to ASTM D-3417.

Since the polylactic acid has a melting point and glass transition temperature in the above ranges, the second biodegradable resin composition may be easily extruded. In addition, since the polylactic acid has a melting point and glass transition temperature in the above ranges, the biodegradable yarn according to an embodiment may have improved mechanical properties. The number average molecular weight (Mn) of the polylactic acid may be about 20000 g/mole to about 160000 g/mole. The number average molecular weight of the polylactic acid may be about 30000 g/mole to about 140000 g/mole. The number average molecular weight of the polylactic acid may be about 40000 g/mole to about 120000 g/mole.

The weight average molecular weight (Mw) of the polylactic acid may be about 40000 g/mole to about 200000 g/mole. The weight average molecular weight of the polylactic acid may be about 50000 g/mole to about 180000 g/mole. The weight average molecular weight of the polylactic acid may be about 70000 g/mole to about 160000 g/mole.

The polydispersity index (Mw/Mn) of the polylactic acid may be about 1.0 to about 3.0. The polydispersity index of the polylactic acid may be about 1.1 to about 2.0. The polydispersity index of the polylactic acid may be about 1.2 to about 1.8. The weight average molecular weight and the number average molecular weight may be measured by methods known to those skilled in the art. For example, the weight average molecular weight and the number average molecular weight may be measured by gel permeation chromatography (GPC). The weight average molecular weight and the number average molecular weight may be measured by standard monodisperse polystyrene.

Since the polylactic acid has a molecular weight and polydispersity index in the above ranges, the second biodegradable resin composition may be easily extruded. In addition, since the polylactic acid has a molecular weight and polydispersity index in the above ranges, the biodegradable yarn according to an embodiment may have improved mechanical properties.

The polylactic acid may have an apparent viscosity of about 50 Pascal. second (Pa· s) to about 600 Pa· s which are measured at a temperature of about 190°C and a shear rate of 1000/s. The polylactic acid may have an apparent viscosity of about 100 Pa·s to about 500 Pa·s which are measured at a temperature of about 190°C and a shear rate of 1000/s. The polylactic acid may have an apparent viscosity of about 200 Pa· s to about 400 Pa· s which are measured at a temperature of about 190°C and a shear rate of 1000/s.

The polylactic acid may have a melt index of about 3 g/10 minutes to about 15 g/10 minutes at about 190°C. The polylactic acid may have a melt index of about 4 g/10 minutes to about 10 g/10 minutes at about 190°C. The polylactic acid may have a melt index of about 6 g/10 minutes to about 10 g/10 minutes at about 190°C.

The polylactic acid may have a melt index of about 10 g/10 minutes to about 30 g/10 minutes at about 220°C. The polylactic acid may have a melt index of about 12 g/10 minutes to about 25 g/10 minutes at about 220°C. The polylactic acid may have a melt index of about 15 g/10 minutes to about 25 g/10 minutes at about 220°C.

The polylactic acid may have a melt index of about 30 g/10 minutes to about 60 g/10 minutes at about 250°C. The polylactic acid may have a melt index of about 35 g/10 minutes to about 55 g/10 minutes at about 250°C. The polylactic acid may have a melt index of about 40 g/10 minutes to about 55 g/10 minutes at about 250°C.

Since the polylactic acid has a viscosity and melt index in the above ranges, the second biodegradable resin composition may be easily extruded. In addition, since the polylactic acid has a viscosity and melt index in the above ranges, the biodegradable yarn according to an embodiment may have improved mechanical properties.

As shown in FIGS. 5 and 6, the biodegradable yarn according to an embodiment may be manufactured by the following method.

FIG. 5 illustrates a composite spinning machine for manufacturing the biodegradable yarn according to an embodiment of the present invention.

The composite spinning machine may include two extruders 21 to respectively melt the first biodegradable resin composition and the second biodegradable resin composition. The molten first and second biodegradable resin compositions may be respectively discharged in a suitable amount through metering pumps 22. As the discharge amount is controlled, a component ratio of the first biodegradable resin composition to the second biodegradable resin composition may be controlled.

The discharged first biodegradable resin composition and the second biodegradable resin composition are supplied to a spinning block 23 through the metering pumps 22, and, as shown in FIG. 6, the spinning block 23 spins the first biodegradable resin composition and the second biodegradable resin composition to produce the filament.

As shown in FIG. 6, the spinning block 23 may spin the first biodegradable resin composition 42 and second biodegradable resin composition 41, melted from the extruders 21, to a nozzle via a distribution plate 37, thereby forming the filament.

More specifically, the second biodegradable resin composition 41 may flow in a flow path inside the distribution plate 37, and the first biodegradable resin composition 42 may flow through a flow path outside the distribution plate 37. While the first biodegradable resin composition 42 surrounds the second biodegradable resin composition 41, a filament

including the core part and the sheath part may be spun through a spinneret 32. The spinning block 23 may include a body 36, and the spinneret 32 may be formed at the bottom of the body 36.

Alternatively, the distribution plate may be omitted. Accordingly, the filament in which the first biodegradable resin composition and the second biodegradable resin composition are mixed may be spun through the spinneret.

Although FIG. 6 illustrates a single filament, the spinning block may include multiple discharge ports to obtain a desired number of filaments. The spun filament may be solidified and crystallized in a cooling tank 25.

An air cooling section may be provided between the spinneret 32 and cooling tank 25 of the spinning block 23. The air cooling section may have a length of about 0.5 cm to 100 cm. The air cooling section may have a length of about 1 cm to about 30 cm.

An undrawn yarn is manufactured by a solidified filament. The undrawn yarn may be drawn through a drawing device 26 and wound by a winder 27. The drawn yarn may be thermally treated at a suitable temperature. The undrawn yarn may be stretched about 1.5 times to about 6 times. An extrusion temperature in the spinning block may be about 180°C to about 250°C. A spinning speed in the spinning block may be about 1000 m/min to about 2000 m/min. The spinning thickness of the filament may be about 2 denier to about 10 denier.

The biodegradable yarn according to an embodiment may have a tensile strength of about 1.5 gf/denier to about 6 gf/denier. The biodegradable yarn according to an embodiment may have a tensile strength of about 1.5 gf/denier to about 5 gf/denier. In an embodiment, the biodegradable yarn according to an embodiment may have a tensile strength of about 1.5 gf/denier to about 4 gf/denier.

The biodegradable yarn according to an embodiment may have an elongation at break of about 20% to about 200%. The biodegradable yarn according to an embodiment may have an elongation at break of about 30% to about 200%. The biodegradable yarn according to an embodiment may have an elongation at break of about 40% to about 200%.

The tensile strength and elongation at break of the biodegradable yarn according to an embodiment may be measured according to ASTM D903.

The biodegradable resin composition according to an embodiment may include the first biodegradable resin composition including the first biodegradable resin including diol, aromatic dicarboxylic acid and aliphatic dicarboxylic acid.

Since the first biodegradable resin composition includes the first biodegradable resin, it may have properties suitable for spinning.

In particular, the first biodegradable resin composition may have a suitable crystallization temperature. Accordingly, the first biodegradable resin composition may be easily spun to produce a biodegradable yarn.

In addition, the first biodegradable resin composition may have a suitable melt index. Accordingly, the first biodegradable resin composition may be easily spun to produce a biodegradable yarn.

In addition, the first biodegradable resin composition may have appropriate MID. Accordingly, the first biodegradable resin composition may be easily spun to produce a biodegradable yarn.

In addition, the first biodegradable resin composition may have a suitable number of carboxyl terminal groups. Accordingly, the first biodegradable resin composition may be easily spun to produce a biodegradable yarn.

That is, the first biodegradable resin composition has the same crystallization temperature, melt index and MID as described above, it may be easily extruded through a fine hole. In addition, since the decomposable resin composition has the same crystallization temperature, melt index and MID as described above, it may be crystallized quickly in the cooling process after the extrusion process, and the melt index may increase. Accordingly, the first biodegradable resin composition may have improved processibility for yarn manufacturing.

In addition, since the first biodegradable resin composition has the same crystallization temperature as described above, it may be easily compressed using appropriate heat and pressure. Accordingly, the first biodegradable resin composition may be included on the surface of the biodegradable yarn according to an embodiment of the present invention. Accordingly, the biodegradable yarns according to an embodiment may be easily pressed together and easily applied to non-woven fabrics or fabrics.

The contents will be explained in more detail by the following examples. However, the following examples are only for illustrating the present invention, and the scope of the present invention is not limited to these examples.

Manufacturing Example 1

Manufacturing of pretreated cellulose nanocrystals

Cellulose nanocrystals (NVC-100, manufacturer: Celluforce) in the form of dry powder having a particle size of about 1 μm to about 50 μm were dispersed in an amount of 1 % by weight in water, and then sonicated for 1 minute at an output of 20000 J/s using a tip-type ultrasonic disperser, thereby manufacturing pretreated nanocellulose.

Manufacturing of biodegradable polyester resin

First step: Obtaining slurry by pretreatment

As shown in Table 1, pretreated nanocellulose, 1,4-butanediol (1,4-BDO) and terephthalic acid (TPA) were mixed in a molar ratio (1,4-BDO:TPA) of 1.4:1, and fed into a slurry tank (the bottom of the slurry tank was an anchor type, the height to the agitator was 40 mm, and three rotating blades were provided) in a non-catalyst state. Here, the D50 of the terephthalic acid (TPA) was 100 ,um. The content of nanocellulose was wt% based on the total raw materials input.

Next, the mixture was pretreated by stirring at 60°C and 100 rpm for 1 hour, thereby obtaining a slurry without phase separation.

Second step: Obtaining prepolymer

The slurry obtained in the first step was fed into a reactor through a supply line, and 250 ppm of tetrabutyl titanate (Dupont, Tyzor TnBT product) as a titanium-based catalyst was added thereto. Next, a first esterification reaction was performed at 220°C under normal pressure for about 1 hour and 30 minutes until 95% of water, a by-product, was discharged. 52 mol% of 1,4-butanediol (1,4-BDO) based on the total moles of diol, 40 mol% of adipic acid (AA) based on the total moles of dicarboxylic acid component, and 200 ppm of tetrabutyl titanate (Dupont, Tyzor TnBT product), a titanium-based catalyst, based on the total weight of diol, aromatic dicarboxylic acid and aliphatic dicarboxylic acid were added to the reaction product, and then a second esterification reaction was performed at 210°C under normal pressure for about 2 hours 10 minutes until 95% of water, a by-product, was discharged, thereby manufacturing a prepolymer having a number average molecular weight of 5500 g/mol.

Third step: Subjecting to condensation polymerization reaction

150 ppm of tetrabutyl titanate (Dupont, Tyzor TnBT product), a titanium-based catalyst, and 500 ppm of a triethylene phosphate stabilizer, based on the total weight of diol, aromatic dicarboxylic acid and aliphatic dicarboxylic acid, were added to the prepolymer obtained in the second step, and stabilized for about 10 minutes. Next, the reaction mixture was heated to 240°C, and then a condensation polymerization reaction was performed under 0.5 torrs for 5 hours, thereby manufacturing a polymer having a number average molecular weight of 25000 g/mol. The manufactured polymer was cooled to 5°C, and then cut using a pellet cutting machine, thereby manufacturing a biodegradable polyester resin composition.

Manufacturing Examples 2 to 5

Biodegradable polyester resin compositions were manufactured under the conditions of Tables 1 to 3 below. For the remaining process conditions, Manufacturing Example 1 was referred to.

Example 1

Manufacturing of biodegradable polyester yarn

The biodegradable polyester resin composition manufactured in Manufacturing Example 1 and polylactic acid (Nature Works, 4032D) were used to manufacture a biodegradable polyester yarn. The polylactic acid was melted at about 240°C in the first extruder and fed into a distribution plate. The biodegradable polyester resin composition was melted at about 240°C in the second extruder and fed to the outside of the distribution plate. Next, a filament in which the biodegradable polyester resin composition surrounded the polylactic acid was discharged through a nozzle of a spinning block. Here, the temperature of the spinning block was about 220°C. In addition, a weight ratio of the polylactic acid to biodegradable polyester resin composition supplied to the spinning block was about 2:1. In addition, the number of nozzles of the spinning block was 19. The spun filament was cooled at about 23 °C cooling tank, stretched about 3 times at about 100°C and wound. As a result, the biodegradable yarn according to an embodiment was manufactured.

Examples 2 to 5 and Comparative Examples 1 to 3

Biodegradable polyester yarns were manufactured under the conditions of Table 4 below. In Example 5, a mixture of Manufacturing Example 1 and polylactic acid was used. For the remaining process conditions, Example 1 were referred to.

Table 1

| Classification | 1,4-BDO (mol%) | TPA (mol%) | Adipic acid (mol%) | CNC (wt%) |
|---|---|---|---|---|
| Manufacturing Example 1 | 140 | 48 | 52 | 0.9 |
| Manufacturing Example 2 | 130 | 47 | 53 | 0.1 |
| Manufacturing Example 3 | 135 | 47 | 53 | 0.05 |
| Manufacturing Example 4 | 135 | 48 | 52 | 0.5 |
| Manufacturing Example 5 | 140 | 60 | 40 | 0.01 |

Table 2

| Classification | First esterification reaction temperature (°C) | First esterification reaction time (h) | Second esterification reaction temperature (°C) | Second esterification reaction time (h) |
|---|---|---|---|---|
| Manufacturing Example 1 | 220 | 1.5 | 240 | 1.5 |
| Manufacturing Example 2 | 210 | 1.5 | 210 | 1.5 |
| Manufacturing Example 3 | 220 | 1.5 | 220 | 1.5 |
| Manufacturing Example 4 | 210 | 1.5 | 210 | 1.5 |
| Manufacturing Example 5 | 230 | 1.5 | 230 | 1.5 |

Table 3

| Classification | Condensation polymerization reaction temperature (°C) | Condensation polymerization reaction time (min) |
|---|---|---|
| Manufacturing Example 1 | 240 | 300 minutes |
| Manufacturing Example 2 | 240 | 290 minutes |
| Manufacturing Example 3 | 240 | 280 minutes |
| Manufacturing Example 4 | 250 | 270 minutes |
| Manufacturing Example 5 | 250 | 330 minutes |

Table 4

| Classification | Inside of distribution plate (core part) (weight ratio) | Outside of distribution plate (sheath part) (weight ratio) | Stretching ratio (times) |
|---|---|---|---|
| Example 1 | Polylactic acid (1) | Manufacturing Example 1 (1) | 3 |
| Example 2 | Polylactic acid (1) | Manufacturing Example 2 (1) | 3 |

(continued)

| Classification | Inside of distribution plate (core part) (weight ratio) | Outside of distribution plate (sheath part) (weight ratio) | Stretching ratio (times) |
|---|---|---|---|
| Example 3 | Polylactic acid (1) | Manufacturing Example 3 (1) | 3 |
| Example 4 | Polylactic acid (1) | Manufacturing Example 4 (1) | 3 |
| Example 5 | Polylactic acid+Manufacturing Example 1(2:1) (1) | Polylactic acid+ Manufacturing Example 1 (1:2) (1) | 3 |
| Comparative Example 1 | Polylactic acid (1) | Polylactic acid (1) | 3 |
| Comparative Example 2 | Polylactic acid (2) | Manufacturing Example 5 (1) | 3 |
| Comparative Example 3 | Manufacturing Example 5 (1) | Manufacturing Example 5 (1) | 3 |

Evaluation examples

Evaluation Example 1: Crystallization temperature

Using a differential scanning calorimetry (DSC), the temperature was raised from 40°C to 180°C at a rate of 10 °C/min, and then isothermal for 5 minutes to perform the first heat history removal process. The second cooling process was performed by cooling from 180°C to -50°C at a rate of 10 °C/min and isothermal for 5 minutes. The crystallization temperature (Tc) was confirmed in the second cooling process.

Evaluation Example 2: Melt index

The melt index (g/10 min) of the biodegradable polyester resin was measured under a load of about 2.16 kg at 190°C, 220°C, and 250°C according to ASTM D1238. The specific conditions were as follows:
Device name: Melt Flow Index(WL 1400, Weed Lab)

Evaluation Example 3: Concentration of carboxyl terminal groups

1 g of the biodegradable polyester resin was completely dissolved in 20 ml of o-cresol, diluted with 50 ml of chloroform, and measured by titration with a sodium hydroxide/methanol solution containing an indicator.

Evaluation Example 4: Molecular weight

Gel permeation chromatography (GPC) was used to measure the number average molecular weights of the biodegradable resin compositions of the examples and the comparative examples.

Sample pretreatment: 0.035 mg of PBAT chip was dissolved in 1.5 ml of THF
Measurement apparatus: WATERS, E2695
Flow rate: 1 ml/min in THF\
Injection volume: 50 $\mu\ell$
Column temperature: 40°C
Detector: ELSD (Evaporative Light Scattering Detector)
Column: Styragel Column HR 5E, HR4, HR2

Evaluation Example 5: Tensile strength and elongation at break

The tensile strength and elongation at break of the biodegradable yarns manufactured in the examples and comparative examples were measured according to ASTM D903.

Evaluation Example 6: Biodegradability

For the biodegradable yarns manufactured in Examples and Comparative Examples, the biodegradability was measured by measuring the amount of carbon dioxide generated according to KS M3100-1. Specifically, an inoculum container containing only compost produced at a compost factory was prepared, and a test container to which a film was added in a volume of 5% by weight of the dry weight of the compost to the compost was prepared. Next, they were cultured for 180 days at a temperature of 58 ± 2°C, a water content of 50%, and an oxygen concentration of 6% or more. Carbon dioxide generated from each container was captured and titrated with an aqueous phenolphthalein solution to measure the amount of carbon dioxide generated from each container. The biodegradability was calculated according to Equation 3 below based on the measured carbon dioxide generation amounts.

Equation 1

$$\text{Biodegradability (\%)} = \frac{(CO_2 \text{ emissions from test container}) - (CO_2 \text{ emissions from inoculum container})}{\text{Theoretical } CO_2 \text{ emissions from biodegradable resin}} \text{ X } 100$$

Evaluation Example 7: Processibility

The processibility of the biodegradable yarns in the examples and the comparative examples was evaluated as follows:

Biodegradable yarn was produced in excess of 1000 m without interruption: Good (O)

Biodegradable yarn was broken within 1000 m: Poor (X)

Evaluation Example 7: Fusibility

The fusibility between the biodegradable yarns manufactured in the examples and the comparative examples was observed with the naked eye when a pressure of about 1 MPa was applied for about 10 seconds at about 80°C.

Overall fusion: Good (O)

No fusion: Poor (X)

Table 5

| Classification | Crystallization temperature(°C) | Number average molecular weight (g/mol) | Terminal group content (eq/ton) |
|---|---|---|---|
| Manufacturing Example 1 | 60 | 30000 | 32 |
| Manufacturing Example 2 | 55 | 25000 | 30 |
| Manufacturing Example 3 | 52 | 27000 | 30 |
| Manufacturing Example 4 | 53 | 25000 | 30 |
| Manufacturing Example 5 | 50 | 40000 | 35 |

Table 6

| Classification | Melt index 190°C (g/10 min) | Melt index 230°C (g/10 min) | Melt index 250°C (g/10 min) |
|---|---|---|---|
| Manufacturing Example 1 | 7.2 | 25.2 | 45.2 |
| Manufacturing Example 2 | 10.2 | 33.2 | 55.5 |
| Manufacturing Example 3 | 18.2 | 40.3 | 72.6 |
| Manufacturing Example 4 | 28.3 | 75.2 | 100.1 |
| Manufacturing Example 5 | 2.6 | 14.7 | 29.8 |

Table 7

| Classification | Tensile strength (gf/ denier) | Elongation at break (%) | Biodegradability (%) | Fusibility | Processibility |
|---|---|---|---|---|---|
| Example 1 | 2.3 | 36 | 90 | O | O |
| Example 2 | 2.4 | 26 | 90 | O | O |
| Example 3 | 2.0 | 20 | 90 | O | O |
| Example 4 | 1.6 | 18 | 90 | O | O |
| Example 5 | 1.5 | 12 | 90 | O | O |
| Comparative Example 1 | 2.6 | 10 | 90 | X | O |
| Comparative Example 2 | - | - | - | - | X |
| Comparative Example 3 | - | - | - | - | X |

As shown in Tables 5 to 7, the biodegradable yarn according to an embodiment has improved mechanical properties, improved biodegradability, improved processibility and improved fusibility.

Description of Drawing Symbols

Filament 10
core part 12
sheath part 13
slurry agitator 100
esterification supply line 200
condensation polymerization supply line 300
post-processer 400
first recoverer 510
second recoverer 520
two extruders 21
metering pumps 22
spinning block 23
cooling tank 25
drawing device 26
winder 27
first biodegradable resin composition 42
second biodegradable resin composition 41,
distribution plate 37
spinneret 32.

body 36
bottom of the body 36.

## Claims

1. A biodegradable yarn, comprising: a first biodegradable resin composition comprising a first biodegradable resin,

   wherein the first biodegradable resin comprises diol, aromatic dicarboxylic acid and aliphatic dicarboxylic acid, and
   the first biodegradable resin composition has a melt index of 6 g/10 minutes to 15 g/10 minutes at 190°C and a crystallization temperature of 40 °C to 85 °C.

2. The biodegradable yarn according to claim 1, further comprising a filament, wherein the filament comprises:

   a core part comprising a second biodegradable resin composition and having an elongated shape; and
   a sheath part comprising the first biodegradable resin composition and surrounding an outer peripheral surface of the core part.

3. The biodegradable yarn according to claim 1, further comprising a second biodegradable resin composition, wherein the second biodegradable resin composition comprises at least one selected from the group consisting of polybutylene succinate, polylactic acid, polybutylene adipate, polybutylene succinate-adipate, polybutylene succinate-terephthalate, polyhydroxybutyrate-valerate, polycaprolactone and polybutylene succinate adipate terephthalate.

4. The biodegradable yarn according to claim 1, wherein the first biodegradable resin composition has a crystallization temperature of 45°C to 80°C.

5. The biodegradable yarn according to claim 1, wherein the first biodegradable resin composition has a melt index of 6 g/10 minutes to 35 g/10 minutes at 190°C.

6. The biodegradable yarn according to claim 1, wherein the first biodegradable resin composition has a melt index decrease (MID) of 0.4 g/10 minutes.°C to 1.5 g/10 minutes.°C represented by Equation 1 below:

   Equation 1

   $$MID = (MI2 - MI1)/(T2 - T1)$$

   wherein T1 is 190°C, and T2 is 250°C,
   MI1 is a melt index when a temperature of the first biodegradable resin composition is T1, and
   MI2 is a melt index when a temperature of the first biodegradable resin composition is T2.

7. The biodegradable yarn according to claim 1, wherein the biodegradable yarn has a tensile strength of 1.5 gf/denier to 6 gf/denier and an elongation at break of 20% to 200%.

8. A biodegradable resin composition, comprising: a biodegradable resin,

   wherein the biodegradable resin comprises diol, aromatic dicarboxylic acid and aliphatic dicarboxylic acid, and the biodegradable resin composition has a melt index of 6 g/10 minutes to 15 g/10 minutes at 190°C and a crystallization temperature of 40°C to 85°C.

9. The biodegradable resin composition according to claim 8, further comprising a crystallization temperature regulator.

10. The biodegradable resin composition according to claim 8, wherein a content of terminal groups in the biodegradable resin is 20 eq/ton or more and less than 60 eq/ton.

**11.** The biodegradable resin composition according to claim 8, wherein the biodegradable resin composition has a melt index decrease (MID) of 0.4 g/10 minutes.°C to 1.5 g/10 minutes.°C represented by Equation 1 below:

Equation 1

$$MID = (MI2 - MI1)/(T2 - T1)$$

wherein T1 is 190°C, and T2 is 250°C,
MI1 is a melt index when a temperature of the first biodegradable resin composition is T1, and
MI2 is a melt index when a temperature of the first biodegradable resin composition is T2.

**12.** The biodegradable resin composition according to claim 8, wherein the biodegradable resin has a number average molecular weight of 20000 g/mol to 35000 g/mol.

**13.** The biodegradable resin composition according to claim 8, wherein the biodegradable resin composition has a melt index of 20 g/10 minutes to 90 g/10 minutes at 230°C.

**14.** The biodegradable resin composition according to claim 13, wherein the biodegradable resin composition has a melt index of 40 g/10 minutes to 120 g/10 minutes at 250°C.

【FIG. 1】

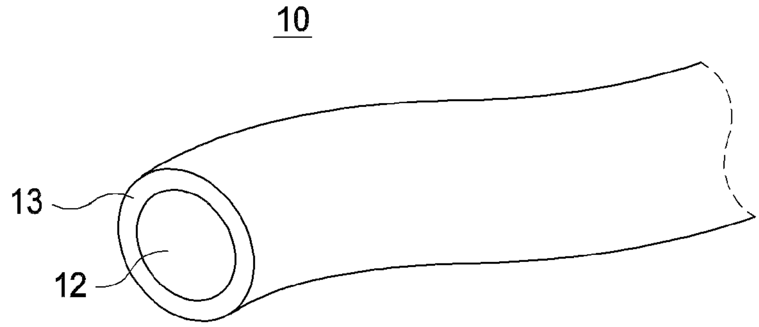


【FIG. 2】

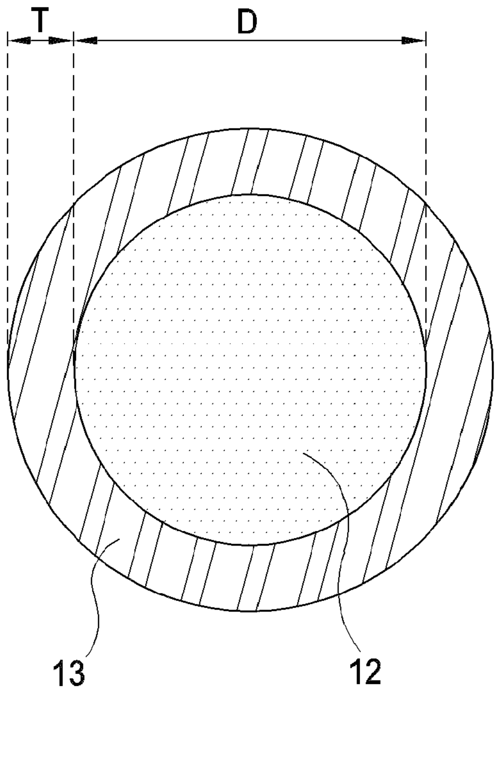

【FIG. 3】

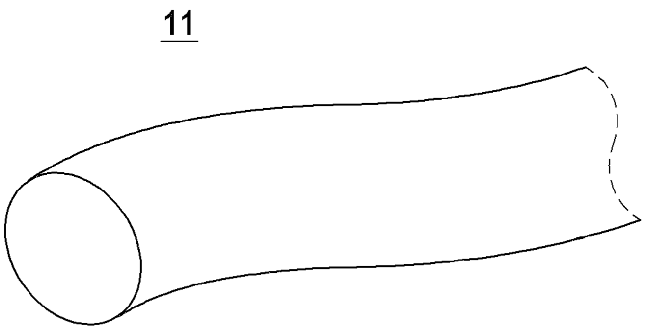


【FIG. 4】

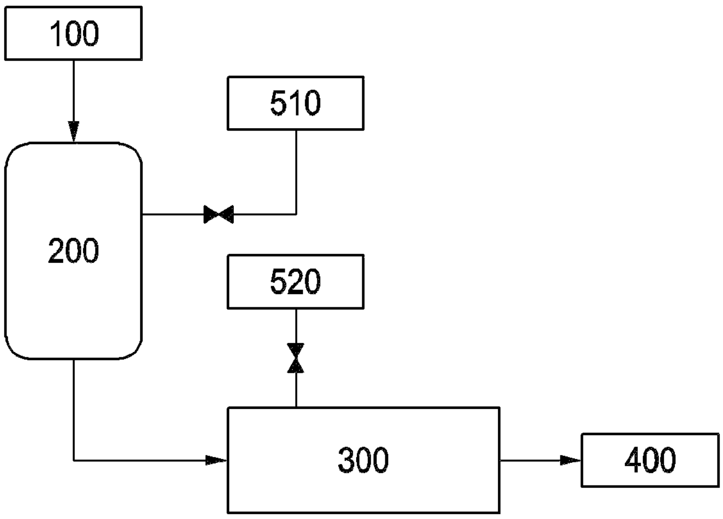


【FIG. 5】

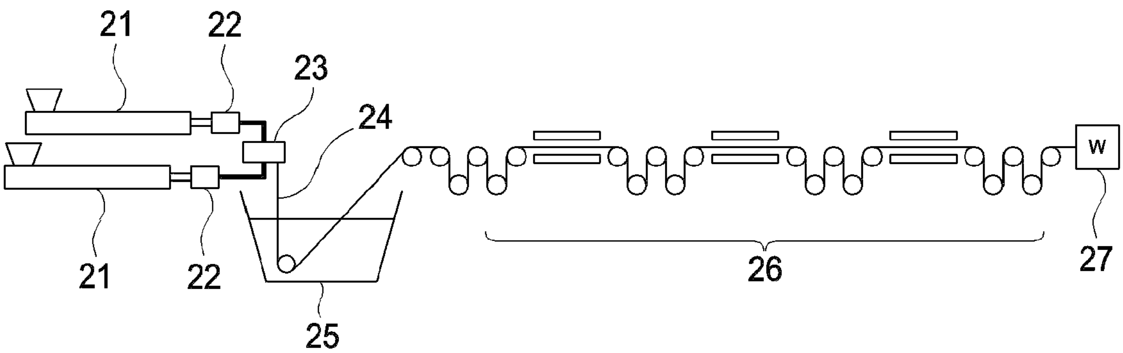

【FIG. 6】

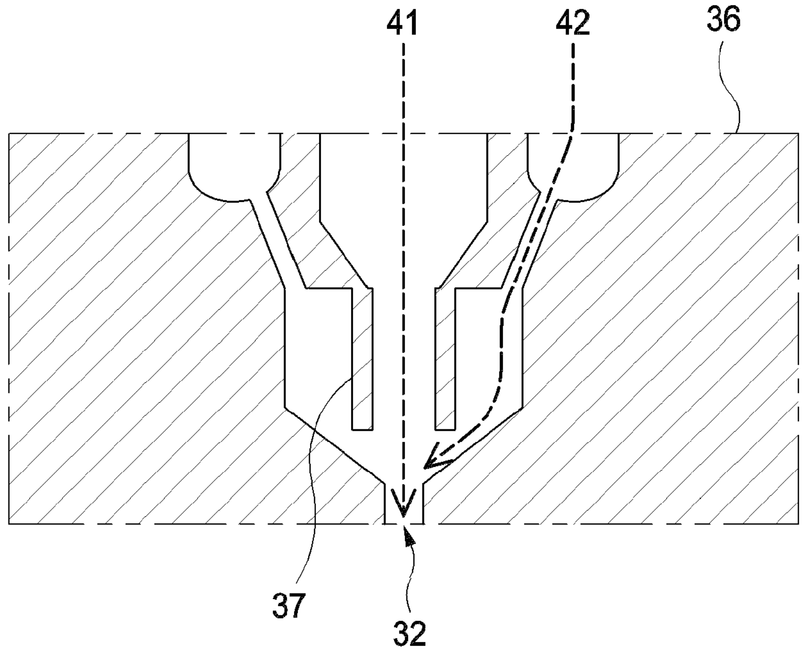

Europäisches Patentamt
European Patent Office
Office européen des brevets

# EUROPEAN SEARCH REPORT

Application Number
EP 24 18 1894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 858 951 B2 (NOVAMONT SPA [IT]) 14 June 2017 (2017-06-14) * paragraphs [0032], [0082], [0099], [0102]; examples 1a, 5,6; table 1 * | 1-5,8, 13,14 | INV. D01D5/34 D01F6/84 D01F6/92 D01F8/14 |
| X | US 2013/309932 A1 (HE AIMIN [US] ET AL) 21 November 2013 (2013-11-21) * claims 1,10,11 * | 1-3,5-8, 10-12 | |
| X | EP 4 095 180 A1 (ECOVANCE CO LTD [KR]) 30 November 2022 (2022-11-30) * paragraph [0210]; examples 1-7; tables 1,2 * | 1,4-12 | |

TECHNICAL FIELDS SEARCHED (IPC)

D01D
D01F

The present search report has been drawn up for all claims

1

| Place of search | Date of completion of the search | Examiner |
|---|---|---|
| The Hague | 1 November 2024 | Beyazit, Selim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 18 1894

This annex lists the patent family members relating to the patent documents cited in the above-mentioned European search report. The members are as contained in the European Patent Office EDP file on
The European Patent Office is in no way liable for these particulars which are merely given for the purpose of information.

01-11-2024

| Patent document cited in search report | Publication date | Patent family member(s) | Publication date |
|---|---|---|---|
| EP 1858951 B2 | 14-06-2017 | AT E401374 T1 | 15-08-2008 |
| | | AT E410458 T1 | 15-10-2008 |
| | | AT E462744 T1 | 15-04-2010 |
| | | AT E509057 T1 | 15-05-2011 |
| | | AU 2006224682 A1 | 21-09-2006 |
| | | BR PI0611457 A2 | 14-09-2010 |
| | | CA 2601181 A1 | 21-09-2006 |
| | | CA 2601183 A1 | 21-09-2006 |
| | | CA 2601519 A1 | 21-09-2006 |
| | | CA 2601522 A1 | 21-09-2006 |
| | | CN 101142255 A | 12-03-2008 |
| | | CN 101142256 A | 12-03-2008 |
| | | CN 101142276 A | 12-03-2008 |
| | | CN 101283020 A | 08-10-2008 |
| | | CN 103087299 A | 08-05-2013 |
| | | EG 25733 A | 19-06-2012 |
| | | EP 1858951 A1 | 28-11-2007 |
| | | EP 1858978 A1 | 28-11-2007 |
| | | EP 1863860 A1 | 12-12-2007 |
| | | EP 1863861 A1 | 12-12-2007 |
| | | EP 2163567 A2 | 17-03-2010 |
| | | EP 2287224 A1 | 23-02-2011 |
| | | ES 2310913 T3 | 16-01-2009 |
| | | ES 2316056 T3 | 01-04-2009 |
| | | ES 2342192 T3 | 02-07-2010 |
| | | ES 2365532 T3 | 06-10-2011 |
| | | ES 2661949 T3 | 04-04-2018 |
| | | ES 2662017 T3 | 05-04-2018 |
| | | HK 1118845 A1 | 20-02-2009 |
| | | HK 1118846 A1 | 20-02-2009 |
| | | HK 1118850 A1 | 20-02-2009 |
| | | JP 5011274 B2 | 29-08-2012 |
| | | JP 5052496 B2 | 17-10-2012 |
| | | JP 5264474 B2 | 14-08-2013 |
| | | JP 2008533255 A | 21-08-2008 |
| | | JP 2008533256 A | 21-08-2008 |
| | | JP 2008536961 A | 11-09-2008 |
| | | KR 20070122486 A | 31-12-2007 |
| | | NO 344336 B1 | 04-11-2019 |
| | | PL 1858951 T3 | 30-09-2010 |
| | | PL 1858978 T3 | 30-01-2009 |
| | | PL 1863860 T3 | 30-04-2009 |
| | | PL 1863861 T3 | 31-10-2011 |
| | | PL 2163567 T3 | 31-07-2018 |
| | | PL 2287224 T3 | 31-07-2018 |
| | | TR 201803019 T4 | 21-03-2018 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 24 18 1894

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2024

| Patent document cited in search report | Publication date | Patent family member(s) | Publication date |
|---|---|---|---|
| | | UA 89401 C2 | 25-01-2010 |
| | | US 2008188593 A1 | 07-08-2008 |
| | | US 2008194770 A1 | 14-08-2008 |
| | | US 2008214702 A1 | 04-09-2008 |
| | | US 2009005472 A1 | 01-01-2009 |
| | | US 2012219740 A1 | 30-08-2012 |
| | | US 2012220687 A1 | 30-08-2012 |
| | | US 2012220698 A1 | 30-08-2012 |
| | | US 2012225230 A1 | 06-09-2012 |
| | | WO 2006097353 A1 | 21-09-2006 |
| | | WO 2006097354 A1 | 21-09-2006 |
| | | WO 2006097355 A1 | 21-09-2006 |
| | | WO 2006097356 A1 | 21-09-2006 |
| US 2013309932 A1 | 21-11-2013 | NONE | |
| EP 4095180 A1 | 30-11-2022 | CN 115386072 A | 25-11-2022 |
| | | EP 4095180 A1 | 30-11-2022 |
| | | JP 7291268 B2 | 14-06-2023 |
| | | JP 2022181205 A | 07-12-2022 |
| | | JP 2023058640 A | 25-04-2023 |
| | | KR 102431671 B1 | 12-08-2022 |
| | | KR 20220159255 A | 02-12-2022 |
| | | KR 20230058600 A | 03-05-2023 |
| | | TW 202246381 A | 01-12-2022 |
| | | US 2022389154 A1 | 08-12-2022 |
| | | US 2023257516 A1 | 17-08-2023 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230077655
- KR 20120103158
- US 4797468 A
- US 5470944 A
- US 5770682 A
- US 5821327 A
- US 5880254 A
- US 6326458 B